Europäisches Patentamt

(19) European Patent Office

Office européen des brevets

(11) **EP 1 172 209 A1**

(12) **EUROPEAN PATENT APPLICATION**
published in accordance with Art. 158(3) EPC

(43) Date of publication:
   **16.01.2002 Bulletin 2002/03**

(51) Int Cl.⁷: **B41F 35/00**

(21) Application number: **00935649.4**

(22) Date of filing: **13.06.2000**

(86) International application number:
   **PCT/JP00/03812**

(87) International publication number:
   **WO 01/53100 (26.07.2001 Gazette 2001/30)**

(84) Designated Contracting States:
   **AT BE CH CY DE DK ES FI FR GB GR IE IT LI LU
   MC NL PT SE**
   Designated Extension States:
   **AL LT LV MK RO SI**

(30) Priority: **19.01.2000 JP 2000009737
            24.05.2000 JP 2000153867**

(71) Applicant: **NITTO DENKO CORPORATION
   Ibaraki-shi, Osaka 567-8680 (JP)**

(72) Inventors:
   • **HIRAMATSU, Tsuyoshi, c/o Nitto Denko Corp.
     Ibaraki-shi, Osaka 567-8680 (JP)**

   • **TANI, Atsushi, c/o Nitto Denko Corp.
     Ibaraki-shi, Osaka 567-8680 (JP)**
   • **HABA, Noriyuki, c/o Nitto Denko Corp.
     Ibaraki-shi, Osaka 567-8680 (JP)**
   • **AKAMATSU, Hideki, c/o Nitto Denko Corp.
     Ibaraki-shi, Osaka 567-8680 (JP)**

(74) Representative:
   **Grünecker, Kinkeldey, Stockmair &
   Schwanhäusser Anwaltssozietät
   Maximilianstrasse 58
   80538 München (DE)**

(54) **PRESSURE-SENSITIVE ADHESIVE SHEET FOR REMOVING SOLVENT-CONTAINING
     MATERIAL**

(57)    An invented pressure-sensitive adhesive sheet for removal of a solvent-containing substance includes a substrate and a pressure sensitive adhesive layer formed at least on one side of the substrate, and the pressure sensitive adhesive layer adsorbs 20 g/m² or more of a solvent contained in the substance to be removed when the sheet is immersed in the solvent for 3 minutes. Another invented pressure-sensitive adhesive sheet for removal of a solvent-containing substance includes a substrate and a pressure sensitive adhesive layer formed at least on one side of the substrate, the pressure-sensitive adhesive layer absorbs 5 g/m² or more of a solvent contained in the substance to be removed when the sheet is immersed in the solvent for 1 second, and the sheet after absorbing 5 g/m² of the solvent has a tackiness of 1 cN/25-mm or more as determined by a method in conformity with JIS Z 0237. The invented pressure-sensitive adhesive sheets can reliably adhere to and remove the solvent-containing substance deposited on an article to be treated, such as a paste turned about the back of a screen printing plate. These sheets can therefore reduce imperfect printing due to bleeding in screen printing and can shorten the time of cleaning for rolls to thereby improve productivity in offset printing, gravure printing and flexographic printing.

EP 1 172 209 A1

**Description**

Technical Field

The present invention relates to sheets for removal of a solvent-containing substance (material) and to methods for removing a solvent-containing substance (material). Such solvent-containing substances include pastes (inks) turned about backs of screen printing plates during screen printing operation, inks deposited on rollers of printing machines for offset printing, gravure printing or flexographic printing, as well as inks for ink-jet printers and paints.

Background Art

Solvent-containing substances such as pastes, inks, and other semisolid substances containing solvents and being in wet conditions are widely used in the fields of printing, paints, and adhesives. However, when these solvent-containing substances are in existence in excess in a specific region or are in existence in an undesired region, they stain or contaminate machinery, equipment or hands, deteriorate the qualities of products and invite other various problems.

For example, when a certain number of printing operations is performed in screen printing, a paste (an ink) turns about the back of a screen printing plate to thereby stain a printed matter or to thereby stain a print image. Thus, precise and beautiful printing cannot be performed. Known methods for removing a paste deposited on a screen printing plate include a method in which the paste is mechanically scraped off using a squeegee, a method in which the paste is wiped off using a wiping rag (waste) and a method in which the screen printing plate is immersed and cleaned in a solvent in a cleaning tank. Known methods for cleaning floors, desks and walls carrying, for example, a deposited fluorescent agent or paint containing a solvent include a method in which the deposit is wiped off using a wiping rag, and a method in which the deposit is scraped off with a spatula or squeegee. However, such methods for cleaning machines or floors carrying deposited solvent-containing substances using a squeegee or wiping rag may damage an article to be cleaned due to physical forces applied on the article and may highly possibly broaden stained portions toward surroundings.

To avoid, for example, bleeding during screen printing, several methods have been proposed in which a paste turned about the back of a printing plate is removed by the use of a pressure-sensitive adhesive sheet. For example, Japanese Unexamined Patent Application Publication No. 3-74893 discloses a method for screen printing of a printed-wiring board in which a paste turned about the back of a printing plate is removed by subjecting the back of the printing plate to screen printing on a pressure-sensitive adhesive side of a pressure-sensitive adhesive sheet. Likewise, Japanese Unexamined Patent Application Publication No. 6-297681 describes a method for removing a paste turned about the back of a printing plate in which a pressure-sensitive adhesive sheet is stuck to and peeled off from the printing plate. The publication mentions that the method is not affected by dirt or dust derived from wiping rags or paper to thereby avoid imperfect printing as compared with a method, in which the paste is wiped off with a wiping rag or paper using a solvent. However, the aforementioned publications substantially lack the description about pressure-sensitive adhesive sheets for use in removal of the paste turned about, and Japanese Unexamined Patent Application Publication No. 3-74893 only describes the thickness and tackiness of an appropriate film. Japanese Unexamined Patent Application Publication No. 59-114055 discloses a method for removing an ink remained on a blanket cylinder of an offset printing machine, in which pressure-sensitive adhesive tape is used, but this publication fails to describe any required characteristics of the pressure-sensitive adhesive tape.

The present inventors therefore made attempts to remove pastes or inks by actually using pressure-sensitive adhesive sheets, but expected effects could not be obtained in any of conventionally used pressure-sensitive adhesive tapes or sheets. For example, when a pressure-sensitive adhesive sheet was used, part of the paste was stuck to a pressure-sensitive adhesive surface of the sheet but the remainder of the paste remained on the back of a screen printing plate, and the paste seemed to undergo cohesive failure between screen printing plate and the pressure-sensitive adhesive sheet. When another pressure-sensitive adhesive sheet was used, a pressure-sensitive adhesive layer absorbed a solvent in a paste and lost its tackiness, and a residue (a glop) of the paste after the absorption of the solvent was fixed to the back of the screen printing plate. Additionally, when a highly tacky pressure-sensitive adhesive sheet was used, the pressure-sensitive adhesive sheet could remove the paste but could not be significantly peeled off from the screen printing plate due to its excessively high tackiness and an emulsion of the screen printing plate was peeled off from the printing plate.

Additionally, the present inventors found that, when a conventionally used pressure-sensitive adhesive tape or sheets was used, components derived from the pressure-sensitive adhesive tape or sheet migrated to, for example, screen printing plate after the pressure-sensitive adhesive tape or sheet was peeled off to thereby stain a surface of the screen printing plate. Such stain causes problems of an article to be treated. For example, when a fluorescent material is screen-printed on a plasma display, the stain of the fluorescent material markedly deteriorate light-emitting characteristics of the fluorescent material.

If an inappropriate pressure-sensitive adhesive tape is used for removal of a solvent-containing substance by sticking the pressure-sensitive adhesive tape to the solvent-containing substance, stains are contrarily broadened. However, according to conventional techniques, several types of such conventional pressure-sensitive adhesive tapes must be actually subjected to testing before selecting an appropriate pressure-sensitive adhesive tape that can clean a target article to be cleaned.

Separately, static electricity builds up during removal of a solvent-containing substance such as a paste with the use of a pressure-sensitive adhesive sheet and invites problems. When two plies of pressure-sensitive adhesive sheets are electrostatically charged and approach each other on a pass line, the pressure-sensitive adhesive sheets are attracted or repel each other due to the static electricity. Additionally, when the pressure-sensitive adhesive sheet is brought close to a screen printing plate carrying a deposited paste (an ink), the static electricity makes the paste (ink) blown off in some cases. If an operator touches the pressure-sensitive adhesive sheet during operation, he (she) may feel discomfort caused by electrostatical shock. Furthermore, the static electricity may make surrounding dirt or dust deposited on the pressure-sensitive adhesive sheet, thus inhibiting the removal of the paste (ink).

As a possible solution to these problems, a static eliminator is provided in a cleaning unit for a screen printing machine. However, a multitude of static eliminators must be provided in order to inhibit electrostatic buildup in every region of the screen printing machine, thus increasing demerit in cost. Additionally, if the type of a pressure-sensitive adhesive sheet or another means to remove the paste is changed, the region where the static electricity is accumulated changes and an extra static eliminator must be added to the cleaning unit in some cases.

Disclosure of Invention

Accordingly, an object of the present invention is to provide a pressure-sensitive adhesive sheet for removal of a solvent-containing substance, which can reliably adhere to and remove the solvent-containing substance, as well as to provide a method for removing a solvent-containing substance using the pressure-sensitive adhesive sheet. The solvent-containing substance includes, for example, a paste turned about the back of a screen printing plate, an ink remained on a blanket cylinder of an offset printing machine, and an ink stain in the vicinity of an ink jet orifice of an ink jet printer.

Another object of the present invention is to provide a pressure-sensitive adhesive sheet for removal of a solvent-containing substance, which can reliably and quickly adhere to and remove the solvent-containing substance without staining of an article to be treated such as a screen printing plate with components derived from the pressure-sensitive adhesive sheet, as well as to provide a method for removing a solvent-containing substance using the pressure-sensitive adhesive sheet.

A further object of the present invention is to provide a sheet for removal of a solvent-containing substance, which can reliably adhere to and remove the solvent-containing substance deposited on, for example, a machine or floor without broadening stains toward surroundings, as well as to provide a method for removing a solvent-containing substance using the pressure-sensitive adhesive sheet.

Yet another object of the present invention is to provide a pressure-sensitive adhesive sheet for removal of solvent-containing substance, which can easily clean an article to be cleaned, does not damage the article and does not broaden stains, as well as to provide a method for removing a solvent-containing substance using the pressure-sensitive adhesive sheet.

Still another object of the present invention is to provide a pressure-sensitive adhesive sheet for removal of a solvent-containing substance, which is highly versatile and can be applied to a wide variety of articles to be cleaned and solvent-containing substances (deposits), as well as to provide a method for removing a solvent-containing substance using the pressure-sensitive adhesive sheet.

Another object of the present invention is to provide a method for removing a solvent-containing substance, which method can easily select and use an optimum pressure-sensitive adhesive sheet depending on the type of a solvent in the solvent-containing substance deposited on an article to be cleaned.

A further object of the present invention is to provide a pressure-sensitive adhesive sheet for removal of a solvent-containing substance, which can satisfactorily remove the solvent-containing substance such as a paste turned about the back of a screen printing plate and can be peeled off without damaging the article to be cleaned such as the screen printing plate, as well as to provide a method for removing a solvent-containing substance using the pressure-sensitive adhesive sheet.

Yet another object of the present invention is to provide a sheet for removal of a solvent-containing substance, which can efficiently remove the solvent-containing substance such as a paste turned about the back of a screen printing plate while preventing electrostatic buildup, as well as to provide a method for removing a solvent-containing substance using the sheet.

After intensive investigations to achieve the above objects, the present inventors have found that, when a pressure-sensitive adhesive sheet contains a pressure-sensitive adhesive layer that can absorb at least a predetermined amount of a solvent contained in a solvent-containing substance to be removed, the resulting pressure-sensitive adhesive sheet can reliably adhere to and remove the solvent-containing substance to be removed, that, when a pressure-sensitive adhesive sheet contains a pressure-sensitive adhesive layer that can absorb at least a predetermined amount of a solvent contained in a solvent-containing substance to be removed in a short time and has a tackiness within a specific range after absorbing the solvent, the resulting pressure-sensitive adhesive sheet can reliably adhere to and remove the solvent-containing substance to be removed, and that; when a pressure-sensitive adhesive sheet has a pressure-sensitive adhesive layer that can absorb at least a predetermined amount of a solvent contained in a solvent-containing substance to be removed in a short time, and components constituting the pressure-sensitive adhesive layer do not migrate into an adherend in a predetermined peel test after absorbing a predetermined amount of the solvent, the resulting pressure-sensitive adhesive sheet can efficiently remove the solvent-containing substance to be removed from an article to be treated without staining of the article to be treated after the removal.

Additionally, the present inventors have found a relation between the capability of a pressure-sensitive adhesive sheet for removal of a solvent-containing substance and the dissolving property of a pressure-sensitive adhesive constituting a pressure-sensitive adhesive layer. The present inventors therefore have made further investigations on solubility parameters that are used as indicators of dissolution phenomenon and have found that the pressure-sensitive adhesive sheet can reliably adhere to and remove a solvent-containing substance without broadening the same toward surroundings, when the solubility parameter of the pressure-sensitive adhesive is in a specific relation with the solubility parameter of a solvent contained in the solvent-containing substance to be removed.

The present inventors have further found that, when a pressure-sensitive adhesive sheet has a pressure-sensitive adhesive layer containing fine particles, the resulting pressure-sensitive adhesive sheet can reliably adhere to and remove a solvent-containing substance such as a paste (an ink) turn about the back of a screen printing plate without damaging the article to be cleaned such as the screen printing plate.

In addition, the present inventors have found that, when a sheet for removal of a solvent-containing substance has been subjected to antistatic treatment, the resulting sheet can prevent electrostatic buildup during a process of removing a solvent-containing substance such as a paste (an ink) turned about the back of a screen printing plate and can prevent the occurrence of malfunctions caused by the static electricity.

The present invention has been accomplished based on these findings.

Specifically, the present invention provides a pressure-sensitive adhesive'sheet for removal of a solvent-containing substance, which pressure-sensitive adhesive sheet includes a substrate and a pressure-sensitive adhesive layer formed at least on one side of the substrate. In this pressure-sensitive adhesive sheet (hereinafter briefly referred to as "sheet 1 for removal of a solvent-containing substance"), the pressure sensitive adhesive layer adsorbs 20 $g/m^2$ or more of a solvent contained in the substance to be removed when the pressure-sensitive adhesive sheet is immersed in the solvent for 3 minutes.

The present invention provides a pressure-sensitive adhesive sheet for removal of a solvent-containing substance, which pressure-sensitive adhesive sheet includes a substrate and a pressure sensitive adhesive layer formed at least on one side of the substrate. In this pressure-sensitive adhesive sheet (hereinafter briefly referred to as "sheet 2 for removal of a solvent-containing substance"), the pressure-sensitive adhesive layer absorbs 5 $g/m^2$ or more of a solvent contained in the substance to be removed when the pressure-sensitive adhesive sheet is immersed in the solvent for 1 second, and the pressure-sensitive adhesive sheet after absorbing 5 $g/m^2$ of the solvent has a tackiness of 1 cN/25-mm or more as determined by a method in conformity with Japanese Industrial Standards (JIS) Z 0237.

The present invention further provides a pressure-sensitive adhesive sheet for removal of a solvent-containing substance, which includes a substrate and a pressure sensitive adhesive layer formed at least on one side of the substrate. In this pressure-sensitive adhesive sheet (hereinafter briefly referred to as "sheet 3 for removal of a solvent-containing substance"), the pressure-sensitive adhesive layer absorbs 5 $g/m^2$ or more of a solvent contained in the substance to be removed when the pressure-sensitive adhesive sheet is immersed in the solvent for 1 second, and no stain is observed in a stainless steel plate (a SUS 430BA plate) by visual inspection when the pressure-sensitive adhesive sheet after absorbing 5 $g/m^2$ of the solvent is stuck to the stainless steel plate by a reciprocating motion of a 2-kg rubber roller and is peeled off from the stainless steel plate. In the sheet 3 for removal of a solvent-containing substance, a pressure-sensitive adhesive constituting the pressure-sensitive adhesive layer may include insoluble components alone with respect to the solvent contained in the substance to be removed.

The present invention further provides a pressure-sensitive adhesive sheet for removal of a solvent-containing substance, which includes a substrate and a pressure-sensitive adhesive layer formed at least on one side of the substrate. In this pressure-sensitive adhesive sheet (hereinafter briefly referred to as "sheet 4 for removal of a solvent-containing substance"), a difference $\Delta\delta$ between the solubility parameter (SP) $\delta_1$ [ $(J/cm^3)^{1/2}$] of a pressure-sensitive adhesive constituting the pressure-sensitive adhesive layer and the solubility parameter (SP) $\delta_2$ [ $(J/cm^3)^{1/2}$] of a solvent contained in the solvent-containing substance to be removed falls within a range of $\pm4$ [ $(J/cm^3)^{1/2}$].

The present invention still further provides a pressure-sensitive adhesive sheet for removal of a solvent-containing substance, which includes a substrate and a pressure-sensitive adhesive layer formed at least on one side of the substrate. In this pressure-sensitive adhesive sheet (hereinafter briefly referred to as "sheet 5 for removal of a solvent-containing substance"), the pressure-sensitive adhesive layer contains fine particles. The fine particles may have a mean particle size of, for example, from about 0.01 to about 10 μm.

In the sheets 1 to 5 for removal of a solvent-containing substance, the pressure-sensitive adhesive layer before use may have a tackiness of from 1 to 400 cN/25-mm as determined by a method in conformity with JIS Z 0237. The sheets 1 to 5 for removal of a solvent-containing substance are for use in cleaning of a screen printing plate, for example.

The present invention provides, in another aspect, a method for removing a solvent-containing substance deposited on an article to be cleaned, which method includes the step of using a pressure-sensitive adhesive sheet, and the pressure-sensitive adhesive sheet includes a substrate and a pressure-sensitive adhesive layer formed at least on one side of the substrate. In this method (hereinafter briefly referred to as "removing method 1"), the pressure sensitive adhesive layer adsorbs 20 g/m$^2$ or more of a solvent contained in the solvent-containing substance to be removed when the pressure-sensitive adhesive sheet is immersed in the solvent for 3 minutes.

The present invention additionally provides a method for removing a solvent-containing substance deposited on an article to be cleaned, which method includes the step of using a pressure-sensitive adhesive sheet, and the pressure-sensitive adhesive sheet includes a substrate and a pressure-sensitive adhesive layer formed at least on one side of the substrate. In this method (hereinafter briefly referred to as "removing method 2"), the pressure-sensitive adhesive layer absorbs 5 g/m$^2$ or more of a solvent contained in the solvent-containing substance to be removed when the pressure-sensitive adhesive sheet is immersed in the solvent for 1 second, and the pressure-sensitive adhesive sheet after absorbing 5 g/m$^2$ of the solvent has a tackiness of 1 cN/25-mm or more as determined by a method in conformity with JIS Z 0237.

The present invention still further provides a method for removing a solvent-containing substance deposited on an article to be cleaned, which method includes the step of using a pressure-sensitive adhesive sheet including a substrate and a pressure-sensitive adhesive layer formed at least on one side of the substrate. In this method (hereinafter briefly referred to as "removing method 3"), the pressure-sensitive adhesive layer absorbs 5 g/m$^2$ or more of a solvent contained in the substance to be removed when the pressure-sensitive adhesive sheet is immersed in the solvent for 1 second, and no stain is observed in a stainless steel plate (a SUS 430BA plate) by visual inspection when the pressure-sensitive adhesive sheet after absorbing 5 g/m$^2$ of the solvent is stuck to a stainless steel plate by a reciprocating motion of a 2-kg rubber roller and is peeled off from the stainless steel plate.

The present invention further provides a method for removing a solvent-containing substance deposited on an article to be cleaned by using a pressure-sensitive adhesive sheet including a substrate and a pressure-sensitive adhesive layer formed at least on one side of the substrate. This method (hereinafter briefly referred to as "removing method 4") includes the steps of (a) determining the solubility parameter (SP) $\delta_1$ [ $(J/cm^3)^{1/2}$] of a pressure-sensitive adhesive constituting the pressure-sensitive adhesive layer, (b) determining the solubility parameter (SP) $\delta_2$ [ $(J/cm^3)^{1/2}$] of a solvent contained in the solvent-containing substance to be removed, and (c) selecting such a pressure-sensitive adhesive sheet that a difference $\Delta\delta$ between $\delta_1$ and $\delta_2$ falls within a range of $\pm 4°[(J/cm^3)^{1/2}]$ and removing the solvent-containing substance with the use of the selected pressure-sensitive adhesive sheet. In Step (a), the pressure-sensitive adhesive sheet may be immersed respectively in plural solvents having different solubility parameters (SPs) to determine the degree of swelling or gel fraction of the pressure-sensitive adhesive constituting the pressure-sensitive adhesive layer, and the solubility parameter (SP) of a solvent, in which the pressure-sensitive adhesive exhibits the maximum degree of swelling or the minimum gel fraction, may be defined as the solubility parameter (SP) $\delta_1$ [ $(J/cm^3)^{1/2}$] of the pressure-sensitive adhesive constituting the pressure-sensitive adhesive layer of the pressure-sensitive adhesive sheet.

The present invention provides a method for removing a solvent-containing substance deposited on an article to be cleaned, which method includes the step of using a pressure-sensitive adhesive sheet including a substrate and a pressure-sensitive adhesive layer formed at least on one side of the substrate. In this method (hereinafter briefly referred to as "removing method 5"), the pressure-sensitive adhesive layer of the pressure-sensitive adhesive sheet contains fine particles.

In addition, the present invention provides a sheet for removal of a solvent-containing substance, which sheet includes a substrate and a pressure-sensitive adhesive layer or a foam layer formed at least on one side of the substrate. This sheet (hereinafter briefly referred to as "sheet 6 for removal of a solvent-containing substance") has been subjected to antistatic treatment. In the sheet 6 for removal of a solvent-containing substance, at least one of both sides of the sheet may have a surface resistivity of $10^{13}$ $\Omega$ or less. The sheet 6 for removal of a solvent-containing substance may be for use in cleaning of a screen printing plate.

In addition and advantageously, the present invention provides a method for removing a solvent-containing substance deposited on an article to be cleaned, which method includes the step of using a sheet including a substrate and a pressure-sensitive adhesive layer or a foam layer formed at least on one side of the substrate. In this method (hereinafter briefly referred to as "removing method 6"), the sheet has been subjected to antistatic treatment.

Best Mode for Carrying Out the Invention

Substrates (bases) for use in the invented sheets for removal of a solvent-containing substance are not specifically limited. To avoid contamination of dust or foreign matters, polyethylene films, polypropylene films, and other polyolefin films; poly(ethylene terephthalate) films and other polyester films, and other plastic films can be advantageously used, since these plastic films do not form powdery paper dust. However, paper and similar substances can be used as the substrate when the sheets are used for simple cleaning of, for example, rollers. Foam of polyurethanes, polyethylenes, ethylene-propylene-diene rubber (EPDM) and other materials can be advantageously used as the substrate for removal of pastes or inks on uneven surfaces. Additionally, unwoven fabrics, cloths and metallic foils can also be used as the substrate in some applications.

The thickness of the substrate is not specifically limited and can be appropriately set in view of required strength and workability and is generally from about 10 to about 500 $\mu$m, preferably from about 12 to about 200 $\mu$m, and more preferably from about 15 to about 100 $\mu$m. When the substrate is a foam, it generally has a thickness of from about several millimeters to about several ten millimeters.

Pressure-sensitive adhesives (tacky adhesives) for constituting the pressure-sensitive adhesive layer of the invented sheets for removal of a solvent-containing substance are not specifically limited, and any pressure-sensitive adhesives can be used as far as the aforementioned characteristics according to the present invention can be obtained. Such pressure-sensitive adhesives include, but are not limited to, rubber pressure-sensitive adhesives (e.g., natural rubber pressure-sensitive adhesives; styrene-butadiene copolymer, polyisobutylene, styrene-isoprene-styrene copolymer, and other pressure-sensitive adhesives) and acrylic pressure-sensitive adhesives. Among them, acrylic pressure-sensitive adhesives are preferred.

Such acrylic pressure-sensitive adhesives generally comprise a base monomer for imparting adhesion, a comonomer for imparting cohesiveness (agglomeration property) and a functional-group-containing monomer for improving tackiness or for forming crosslinking points. Such base monomers include, but are not limited to, ethyl acrylate, propyl acrylate, isopropyl acrylate, butyl acrylate, isobutyl acrylate, pentyl acrylate, hexyl acrylate, heptyl acrylate, octyl acrylate, 2-ethylhexyl acrylate, nonyl acrylate, decyl acrylate, and other acrylic $C_2$-$C_{10}$ alkyl esters.

The comonomer for imparting cohesiveness includes, but is not limited to, methyl acrylate; methyl methacrylate, ethyl methacrylate, isopropyl methacrylate, and other alkyl methacrylates; vinyl acetate and other vinyl esters; styrene, $\alpha$-methylstyrene, vinyltoluene, and other styrenic monomers; and acrylonitrile, of which vinyl esters and acrylonitrile are preferred.

The functional-group-containing monomer includes, but is not limited to, acrylic acid, methacrylic acid, itaconic acid, maleic anhydride, and other monomers each containing a carboxyl group or an acid anhydride group; 2-hydroxyethyl acrylate, 2-hydroxyethyl methacrylate, hydroxypropyl methacrylate, and other hydroxyl-group-containing monomers; glycidyl acrylate, glycidyl methacrylate, and other epoxy-group-containing monomers; N-methylolacrylamide, N-methylolmethacrylamide, and other amido-group-containing monomers; dimethylaminoethyl methacrylate, t-butylaminoethyl methacrylate, and other amino-group-containing monomers. Among them, acrylic acid and other monomers each containing a carboxyl group or an acid anhydride group are preferred as the functional-group-containing monomer.

The proportions of the base monomer, the comonomer and the functional-group-containing monomer each constituting the acrylic pressure-sensitive adhesive can be appropriately selected depending on, for example, the type of the solvent-containing substance to be removed (the type of a solid matter and the type of a solvent) . For example, the base monomer occupies from about 40% to about 98% by weight and preferably from about 50% to about 95% by weight, the comonomer occupies from about 0% to about 50% by weight and preferably from about 2% to about 40% by weight, and the functional-group-containing monomer occupies from about 0.5% to about 15% by weight and preferably from about 1% to about 10% by weight of the total monomer components.

The pressure-sensitive adhesive layer may further comprise various additives in addition to the pressure-sensitive adhesive polymer (base polymer). Such additives include, but are not limited to, crosslinking agents (e.g., isocyanate crosslinking agents, epoxy crosslinking agents, urea crosslinking agents, melamine crosslinking agents, carboxylic-acid or acid-anhydride crosslinking agents, metallic-compound crosslinking agents), tackifiers [e.g., terpene resins, terpene-phenol resins, modified aromatic terpene resins, hydrogenated terpene resins, and other terpene resins; aliphatic, aromatic, or alicyclic petroleum resins; rosin, hydrogenated rosin esters, and other rosin resins; coumarone-indene resins; and styrenic resins], surfactants [e.g., phosphates, sulfates, sulfonic acids, carboxylic acids, and other anionic surfactants; amine salts, quaternary ammonium salts, and other cationic surfactants; esters, ethers, esterethers, alkanolamides, and other nonionic surfactants; carboxy betaines, glycine, and other amphoteric surfactants], plasticizers, antioxidants, coloring agents, antistatic agents, fillers, and foaming agents. Preferred crosslinking agents include isocyanate crosslinking agents, and preferred tackifiers include terpene-phenol resins and other terpene resins.

The amounts of these additives can be appropriately selected within ranges not deteriorating tackiness and solvent absorptivity. For example, the amount of crosslinking agent is from about 1 to about 30 parts by weight and preferably from about 2 to about 15 parts by weight relative to 100 parts by weight of the pressure-sensitive adhesive polymer (base polymer). The amount of the surfactant is from about 0 to about 10 parts by weight (e.g., from about 0.1 to about 10 parts by weight) and preferably from about 0 to about 5 (e.g., from about 0.2 to about 5 parts by weight) relative to 100 parts by weight of the pressure-sensitive adhesive polymer (base polymer).

In the invented sheet 3 for removal of a solvent-containing substance, the pressure-sensitive adhesive constituting the pressure-sensitive adhesive layer should be preferably composed of components alone which are insoluble in a solvent contained in the substance to be removed. For example, additives such as plasticizers and surfactants other than crosslinking agents tend to dissolve into a solvent contained in, for example, a paste for screen printing, and the sheet 3 for removal of a solvent-containing substance should preferably contain the minimum amounts of these additives. Additionally, it is better to avoid addition of such additives as to be dissolved in the solvent contained in the substance to be removed (to be dissolved out into the solvent).

In the present invention, the pressure-sensitive adhesive layers of the pressure-sensitive adhesive sheets before use preferably have a tackiness (adhesive strength) of 400 cN/25-mm or less (e.g., from 1 to 400 cN/25-mm) as determined by a method in conformity with JIS Z 0237. The tackiness is determined after 1-minute contact-bonding of the pressure-sensitive adhesive sheet and a test plate, a SUS 430BA plate. The upper and lower limits of the tackiness are more preferably 300 cN/25-mm and 3 cN/25-mm, respectively. If the tackiness before use exceeds 400 cN/25-mm, the resulting pressure-sensitive adhesive sheet becomes resistant to peeling off from, for example, a screen printing plate, and an emulsion may be peeled off from the screen printing plate, or repeated operations may elongate the screen to thereby invite imperfect printing. If the tackiness before use is less than 1 cN/25-mm, the pressure-sensitive adhesive surface becomes resistant to adhere to, for example, a paste turned about the back of the printing plate, and desired cleaning effect cannot be significantly obtained. The tackiness of the pressure-sensitive adhesive sheets before use can be controlled by appropriately selecting the types and proportions of constitutional monomers, the type and proportion of the crosslinking agent, glass transition temperature, and average molecular weight of the pressure-sensitive adhesive (resin) constituting the pressure-sensitive adhesive layer, the thickness of the pressure-sensitive adhesive layer, and the type, particle size and amount of the fine particles in the pressure-sensitive adhesive layer.

The thickness of the pressure-sensitive adhesive layer can be freely selected depending on the intended use within a range in which the characteristics according to the present invention can be obtained, and is, for example, from about 5 to about 5000 μm, and preferably from about 10 to about 2000 μm. The pressure-sensitive adhesive sheets may further comprise an undercoat between the substrate and the pressure-sensitive adhesive layer and may have pressure-sensitive adhesive layers on both sides of the substrate. The pressure-sensitive adhesive layer can be formed on the substrate by conventional techniques such as coating.

Solvent-containing substances (materials) to be removed according to the present invention are not specifically limited and include semisolid substances (materials) that contain solvents and are in wet conditions, such as pastes, inks, glues, adhesives, and paints (coating materials).

Solvents contained in the solvent-containing substances include, but are not limited to, hexane, heptane, mineral spirit, and other aliphatic hydrocarbons; cyclohexane and other alicyclic hydrocarbons; toluene, xylene, solvent naphtha, tetralin, dipentene, and other aromatic hydrocarbons; methyl alcohol, ethyl alcohol, isopropyl alcohol, butyl alcohol, isobutyl alcohol, s-butyl alcohol, cyclohexyl alcohol, 2-methylcyclohexyl alcohol, tridecyl alcohol, and other alcohols; methyl acetate, ethyl acetate, isopropyl acetate, butyl acetate, and other esters; acetone, methyl ethyl ketone, methyl isobutyl ketone, cyclohexanone, methylcyclohexanone, diacetone alcohol, isophorone, and other ketones; ethylene glycol, propylene glycol, diethylene glycol, triethylene glycol, dipropylene glycol, and other glycols; butyl β-hydroxyethyl ether (butyl cellosolve), propylene glycol monomethyl ether, propylene glycol monoethyl ether, propylene glycol monobutyl ether, diethylene glycol monobutyl ether, and other glycol ethers; butyl cellosolve acetate, propylene glycol monomethyl ether acetate, propylene glycol monoethyl ether acetate, diethylene glycol monobutyl ether acetate, and other glycol ether esters; and water. In the case of inks for screen printing, medium-boiling solvents (boiling point: from about 120°C to about 230°C) and high-boiling solvents (boiling point: from about 230°C to about 320°C) are frequently used. Typical solvents for use in determination of the solvent absorption are diethylene glycol monobutyl ether acetate and diethylene glycol monobutyl ether [e.g., a mixture of diethylene glycol monobutyl ether acetate and diethylene glycol monobutyl ether [9:1 (by weight)]].

An important feature of the invented sheet 1 for removal of a solvent-containing substance is that (i) the pressure-sensitive adhesive layer absorbs 20 g/m² or more of a solvent contained in the substance to be removed when the pressure-sensitive adhesive sheet is immersed in the solvent for 3 minutes.

An important feature of the invented sheet 2 for removal of a solvent-containing substance is that (ii) the pressure-sensitive adhesive layer absorbs 5 g/m² or more of a solvent contained in the substance to be removed when the pressure-sensitive adhesive sheet is immersed in the solvent for 1 second, and (iii) the pressure-sensitive adhesive sheet after absorbing 5 g/m$^2$ of the solvent has a tackiness (adhesive strength) of 1 cN/25-mm or more as determined by a method in conformity with JIS Z 0237.

An important feature of the invented sheet 3 for removal of a solvent-containing substance is that (ii) the pressure-sensitive adhesive layer absorbs 5 g/m$^2$ or more of a solvent contained in the substance to be removed when the pressure-sensitive adhesive sheet is immersed in the solvent for 1 second, and (iv) no stain is observed in a stainless steel plate (a SUS 430BA plate) by visual inspection when the pressure-sensitive adhesive sheet (20 mm wide) after absorbing 5 g/m$^2$ of the solvent is stuck to the stainless steel plate by a reciprocating motion of a 2-kg rubber roller and is peeled off from the stainless steel plate.

The absorption of the solvent (hereinafter referred to as "solvent absorption") in the characteristics (i) and (ii) is determined in the following manner: A sample of a pressure-sensitive adhesive sheet is cut to 30 to 50 mm square and is weighed, and the weighed sample is immersed in a solvent contained in a solvent-containing substance to be removed for 3 minutes or for 1 second, is taken out from the solvent, the solvent deposited on a surface of the sheet is immediately wiped off with a waste rag, and the sample is again weighed to thereby calculate increase in weight per unit area. The tackiness in the characteristic (iii) is determined one minute after the tested pressure-sensitive adhesive sheet is pressed to a test plate, SUS 430BA. The visual inspection in the characteristic (iv) can be performed according to the visual inspection to verify migration of a pressure-sensitive adhesive of a pressure-sensitive adhesive tape as specified in Japanese Industrial Standards.

In assumed applications of the present invention, the time of contact between the pressure-sensitive adhesive sheet and a cleaning region carrying a solvent-containing substance to be removed is not so long and is assumed to be within 10 minutes. When the solvent absorption of the pressure-sensitive adhesive sheet is determined by the aforementioned method to thereby find the relation between the time of immersing the pressure-sensitive adhesive sheet in a solvent (up to 10 minutes) and the solvent absorption, the solvent absorption becomes almost saturated in 3 minutes. Consequently, by specifying the solvent absorption when the pressure-sensitive adhesive sheet is immersed in a solvent for 3 minutes (nearly equal to saturated solvent absorption) at a predetermined level or higher as in the characteristic (i), a pressure-sensitive adhesive sheet suitable for the application can be specified. In the characteristic (ii), the solvent absorption when the pressure-sensitive adhesive sheet is immersed in a solvent for 1 second is specified. This is because the time of contact between the pressure-sensitive adhesive sheet and a cleaning region carrying a solvent-containing substance to be removed is preferably minimized when the article to be cleaned tends to cause troubles when it is contaminated with components derived from the pressure-sensitive adhesive sheet, and the solvent-containing substance must be removed as efficiently as possible. In addition, in the case where the time of contact between the pressure-sensitive adhesive sheet and the cleaning region is short, for example, in the case when the pressure-sensitive adhesive sheet is stuck to and is immediately peeled off from the cleaning region, the pressure-sensitive adhesive layer must absorb at least a predetermined amount of the solvent in 1 second.

In the sheet 1 for removal of a solvent-containing substance, the solvent absorption in the characteristic (i) should be 20 g/m$^2$ or more for sufficient advantages, is more preferably 25 g/m$^2$ or more and is further preferably 30 g/m$^2$ or more. The upper limit of the solvent absorption is not especially specified and is generally about 100 g/m$^2$. The solvent absorption in the sheet 1 for removal of a solvent-containing substance can be controlled by appropriately selecting the types and proportions of constitutional monomers, the type and proportion of the crosslinking agent, glass transition temperature, and average molecular weight of the pressure-sensitive adhesive (base polymer) constituting the pressure-sensitive adhesive layer, and the thickness of the pressure-sensitive adhesive layer.

The solvent absorption in the characteristic (ii) is should be 5 g/m$^2$ or more for sufficient advantages, is more preferably 6 g/m$^2$ or more and is further preferably 7 g/m$^2$ or more. The upper limit of the solvent absorption is not especially specified and is generally about 50 g/m$^2$. The tackiness after absorbing 5 g/m$^2$ of a solvent in the characteristic (iii) as determined by the above method should be preferably 1 cN/25-mm or more (e.g., from about 1 to about 200 cN/25-mm) for good results, is more preferably 3 cN/25-mm or more (e.g., from about 3 to about 100 cN/25-mm). The solvent absorption and tackiness after absorbing 5 g/m$^2$ of the solvent can be controlled by appropriately selecting the types and proportions of constitutional monomers, the type and proportion of the crosslinking agent, glass transition temperature and average molecular weight of the pressure-sensitive adhesive (base polymer) constituting the pressure-sensitive adhesive layer, the thickness of the pressure-sensitive adhesive layer, and the types and amounts of additives added to the pressure-sensitive adhesive layer.

In the sheet 3 for removal of a solvent-containing substance, the solvent absorption in the characteristic (ii) should be 5 g/m$^2$ or more for sufficient advantages, is more preferably 6 g/m$^2$ or more and is further preferably 7 g/m$^2$ or more. The upper limit of the solvent absorption is not especially specified and is generally about 50 g/m$^2$. The tackiness after absorbing 5 g/m$^2$ of the solvent is preferably 1 cN/25-mm or more (e.g., from about 1 to about 200 cN/25-mm) and more preferably 3 cN/25-mm or more (e.g., from about 1 to about 100 cN/25-mm) as determined by the method in conformity with JIS Z 0237, in which a SUS 430BA plate is used as a test plate, and the tackiness is measured after 1-minute contact-bonding of the pressure-sensitive adhesive sheet and the test plate. The characteristics (ii) and (iv) of the sheet 3 for removal of a solvent-containing substance can be controlled by appropriately selecting the types and proportions of constitutional monomers, the type and proportion of the crosslinking agent, glass transition temperature, and average molecular weight of the pressure-sensitive adhesive (base polymer) constituting the pressure-sensitive adhesive layer, the thickness of the pressure-sensitive adhesive layer, and the types and amounts of additives added to the pressure-sensitive adhesive layer.

According to the invented sheet 1 for removal of a solvent-containing substance and removing method 1, the pressure-sensitive adhesive sheet can absorb 20 g/m$^2$ or more of a solvent contained in a solvent-containing substance such as a paste (an ink) for use in screen printing or an ink deposited on a roll of a printing machine such as an offset printing machine. Accordingly, by sticking the pressure-sensitive adhesive sheet to the back of a screen printing plate or the roll, the pressure-sensitive adhesive sheet can absorb almost all of the solvent contained in the paste turn about the back of the screen printing plate or the ink deposited on the roll to thereby solidify the paste or ink.. Additionally, the pressure-sensitive adhesive sheet has sufficient and extra solvent absorptivity, and the pressure-sensitive adhesive sheet still has some tackiness remained in the sheet even after absorbing a predetermined amount of the solvent. Accordingly, when the pressure-sensitive adhesive sheet is peeled off from the article to be treated, the solidified matter after absorption of the solvent is stuck to the pressure-sensitive adhesive sheet and is removed off from the article to be cleaned. Thus, the pressure-sensitive adhesive sheet can highly effectively remove the solvent-containing substance. If the pressure-sensitive adhesive sheet does not have sufficient solvent absorptivity, it loses tackiness at the time when it absorbs the solvent to thereby fail to remove the solvent-containing substance.

According to the invented sheet 2 for removal of a solvent-containing substance and removing method 2, the pressure-sensitive adhesive sheet can absorb, in a short time, 5 g/m$^2$ or more of a solvent contained in a solvent-containing substance such as a paste (an ink) for use in screen printing or an ink deposited on a roll of a printing machine such as an offset printing machine. Accordingly, by sticking the pressure-sensitive adhesive sheet to the back of a screen printing plate or the roll, the pressure-sensitive adhesive sheet can efficiently absorb, in a short time, the solvent contained in the paste turned about the back of the screen printing plate or the ink deposited on the roll to thereby solidify the paste or ink. Additionally, the pressure-sensitive adhesive sheet still has remained tackiness of 1 cN/25-mm or more even after absorbing a predetermined amount of the solvent. Accordingly, when the pressure-sensitive adhesive sheet is peeled off from the article to be treated, the solidified matter after absorption of the solvent is stuck to the pressure-sensitive adhesive sheet and is removed off from the article to be treated. Thus, the pressure-sensitive adhesive sheet can highly effectively remove the solvent-containing substance.

According to the invented sheet 3 for removal of a solvent-containing substance and removing method 3, the pressure-sensitive adhesive sheet can absorb, in a short time, 5 g/m$^2$ or more of a solvent contained in a solvent-containing substance such as a paste (an ink) for use in screen printing or an ink deposited on a roll of a printing machine such as an offset printing machine. Accordingly, by sticking the pressure-sensitive adhesive sheet to the back of a screen printing plate or the roll, the pressure-sensitive adhesive sheet can immediately absorb almost all of the solvent contained in the paste turned about the back of the screen printing plate or the ink deposited on the roll to solidify the paste or ink to thereby efficiently remove the paste or ink. The pressure-sensitive adhesive sheet used herein has a characteristic in that components of the pressure-sensitive adhesive layer do not migrate into an adherend in the predetermined peel test after absorbing the predetermined amount of a solvent, and the components of the pressure-sensitive adhesive layer do not contaminate or stain a surface of an article to be treated after removing the solvent-containing substance deposited on the article to be treated.

An important feature of the invented sheet 4 for removal of a solvent-containing substance is that a difference $\Delta\delta$ between the solubility parameter (SP) $\delta_1$ [ (J/cm$^3$)$^{1/2}$] of a pressure-sensitive adhesive constituting the pressure-sensitive adhesive layer and the solubility parameter (SP) $\delta_2$ [ (J/cm$^3$)$^{1/2}$] of a solvent contained in the solvent-containing substance to be removed falls within a range of ±4 [ (J/cm$^3$)$^{1/2}$].

When the solubility parameter $\delta_1$ of the pressure-sensitive adhesive satisfies the above relation, the pressure-sensitive adhesive rapidly absorbs the solvent in the solvent-containing substance to be removed, and the pressure-sensitive adhesive constituting the pressure-sensitive adhesive layer maintains its tackiness (adhesion). 'Accordingly, the pressure-sensitive adhesive sheet can reliably adhere to and remove the solvent-containing substance from the article to be cleaned without broadening stains toward surroundings. In contrast, if a pressure-sensitive adhesive sheet, in which the solubility parameter $\delta_1$ [ (J/cm$^3$)$^{1/2}$] of the pressure-sensitive adhesive does not satisfy the above relation, is stuck to a solvent-containing substance, a solvent in the solvent-containing substance cannot be significantly absorbed by the pressure-sensitive adhesive and the tackiness (adhesion) of the pressure-sensitive adhesive is destroyed. Accordingly, stained portions are broadened and the solvent-containing substance cannot be removed by action of tackiness. The difference $\Delta\delta$ more preferably falls within a range of ±3 [ (J/cm$^3$)$^{1/2}$].

The solubility parameter (SP) $\delta_1$ [ (J/cm$^3$)$^{1/2}$] of the pressure-sensitive adhesive constituting the pressure-sensitive adhesive layer can be determined, for example, by the following method. Specifically, the pressure-sensitive adhesive sheet is immersed in several types (at least three types) of solvents having different solubility parameters (SPs); the degree of swelling or gel fraction of the pressure-sensitive adhesive constituting the pressure-sensitive adhesive layer is determined; and the solubility parameter (SP) of a solvent, in which the pressure-sensitive adhesive exhibits the maximum degree of swelling or the minimum gel fraction, is defined as the solubility parameter (SP) (typical) of the pressure-sensitive adhesive. The solubility parameters (SPs) of solvents can be obtained by calculation according to the Fedors method or from known data books or lists.

Typical solvents for use in the determination of the solubility parameter (SP) of the pressure-sensitive adhesive include, for example, n-heptane (15.1), cyclohexane (16.8), toluene (18.1), ethyl acetate (18.6), methyl ethyl ketone (19.0), cyclohexanone (20.3), isobutyl alcohol (21.5), and isopropyl alcohol (23.5). The figures in the parentheses are solubility parameters (SPs) $[ (J/cm^3)^{1/2}]$.

The degree of swelling and gel fraction of the pressure-sensitive adhesive can be determined in the following manner:

(1) Accurately weigh a Teflon film (about 10 cm square) and a kite string (about 12 cm long) for use in the determination (A g).
(2) Wrap about 0.5 to about 1 g of the pressure-sensitive adhesive (or pressure-sensitive adhesive sheet) with the Teflon film using the kite string. Additionally, wrap a substrate alone used in the pressure-sensitive adhesive sheet in the same manner to thereby yield a blank sample.
(3) Accurately weigh the package of the sample prepared in step (2), and subtract the weight of the Teflon film and kite string determined in step (1) (A g) from the weight of the package to thereby determine the sample weight (B g).
(4) Place the above package in a glass bottle of from 50 to 300 ml capacity, and place a solvent to be determined in the glass bottle, and immerse the package therein at room temperature for 7 days.
(5) Take out the package from the glass bottle, quickly wipe off the solvent deposited on the Teflon film, and accurately weigh the resulting package (C g).
(6) Dry the weighed package in an oven (dryer) at 130°C for 2 hours.
(7) Accurately weigh the dried package (D g).
(8) Calculate the degree of swelling according to the following equation.

$$\text{Degree of swelling (\%)} = \{ (C-A)/(D-A)\} \times 100$$

When the pressure-sensitive adhesive sheet is used as the sample, the values obtained by subtracting the values of the blank sample (substrate alone) from measured values are used as C and D in calculation.
(9) Calculate the gel fraction according to the following equation.

$$\text{Gel fraction (\%)} = \{ (D-A)/B\} \times 100$$

When the pressure-sensitive adhesive sheet is used as the sample, the values obtained by subtracting the values of the blank sample (substrate alone) from measured values are used as B and D in calculation.

In the above determination, when a highly viscous solvent is used, a nylon gauze can be used instead of the Teflon film. When a high boiling solvent is used, the drying temperature should be set in the vicinity of the boiling point of the solvent.

When the pressure-sensitive adhesive is polyisobutylene or another pressure-sensitive adhesive that is not crosslinked and completely dissolves out in a solvent, the solubility parameter (SP) of the pressure-sensitive adhesive can be determined in the same manner as above, except that the time period for immersing the sample in the solvent is shortened. Alternatively, the solve-out rate of the pressure-sensitive adhesive is calculated from the test results, and the solubility parameter (SP) of a solvent, in which the pressure-sensitive adhesive exhibits the maximum solve-out rate, may be determined as the solubility parameter (SP) (typical) of the pressure-sensitive adhesive.

When the solubility parameter (SP) of the polymer of the pressure-sensitive adhesive in question is listed as a value obtained as a result of precedent tests or calculation in literature such as "Polymer Handbook" (John Wiley & Sons, Inc.), the listed value may be employed as the solubility parameter (SP) $\delta_1$ of the pressure-sensitive adhesive for use in the present invention.

The solubility parameter (SP) $\delta_2$ $[ (J/cm^3)^{1/2}]$ of the solvent contained in the solvent-containing substance to be removed can also be determined by calculation according to the Fedors method or from known data books. When plural solvents are contained in the solvent-containing substance to be removed, the total sum of the products of the solubility parameters (SPs) and molar fractions of the individual solvents can be used as the solubility parameter (SP) $\delta_2$. However, if at least one of the plural solvents is a solvent that does not solve the pressure-sensitive adhesive, the degree of swelling or gel fraction is determined according to the above method using plural polymers having known SPs listed in literature such as "Polymer Handbook", and SP of a polymer which exhibits the maximum degree of swelling or the minimum gel fraction can be defined as the solubility parameter (SP) $\delta_2$ of the solvent mixture composed of the plural solvents. The solubility parameter (SP) $\delta_2$ of the solvent mixture can also be determined by calculation from the value of latent heat of evaporation, vapor pressure, or other physical properties by known techniques.

In the invented sheet 4 for removal of a solvent-containing substance, the solubility parameter of a pressure-sensitive adhesive constituting the pressure-sensitive adhesive layer of the pressure-sensitive adhesive sheet is in a specific relation with the solubility parameter of a solvent contained in the solvent-containing substance to be removed, and the invented pressure-sensitive adhesive sheet can therefore rapidly absorb the solvent and can maintain its tackiness. Accordingly,'the pressure-sensitive adhesive sheet can reliably adhere to and remove solvent-containing substances deposited on, for example, machines or floors, without broadening stains toward surroundings. Additionally, the invented sheet 4 can easily clean an article to be cleaned without damaging the article and without broadening stains and can be applied to a wide variety of articles to be cleaned and solvent-containing substances (deposits) to be removed. Accordingly, the invented sheet 4 for removal of a solvent-containing substance can realize cleaning operations using an adhesive sheet in printing and painting processes, which cleaning operations have been performed only by wiping with wastes (wiping rags).

The invented removing method 4 includes, as described above, the steps of (a) determining the solubility parameter (SP) $\delta_1$ [ $(J/cm^3)^{1/2}$] of a pressure-sensitive adhesive constituting a pressure-sensitive adhesive layer, (b) determining the solubility parameter (SP) $\delta_2$ [ $(J/cm^3)^{1/2}$] of a solvent contained in a solvent-containing substance to be removed, and (c) selecting such a pressure-sensitive adhesive sheet that a difference $\Delta\delta$ between $\delta_1$ and $\delta_2$ falls within a range of $\pm 4$ [ $(J/cm^3)^{1/2}$] and removing the solvent-containing substance with the use of the selected pressure-sensitive adhesive sheet. According to this method, once SP of a pressure-sensitive adhesive constituting the pressure-sensitive adhesive layer in each pressure-sensitive adhesive sheet is determined, a usable pressure-sensitive adhesive sheet can be rapidly selected depending on the type (structure) of the solvent contained in the solvent-containing substance to be removed which is deposited on an article to be cleaned.

An important feature of the invented sheet 5 for removal of a solvent-containing substance is that the pressure-sensitive adhesive layer contains fine particles. The pressure-sensitive adhesive layer containing fine particles can be prepared by adding and dispersing the fine particles into a pressure-sensitive adhesive, and applying the resulting pressure-sensitive adhesive composition to a substrate. Such fine particles are not specifically limited as far as they are not miscible with the pressure-sensitive adhesive and include, for example, organic fine particles comprising poly (methyl methacrylate) resins, melamine resins, and other synthetic resins or natural resins; inorganic fine particles comprising amorphous silica, alumina and other inorganic oxides, inorganic hydroxides and inorganic salts.

The content of the fine particles in the pressure-sensitive adhesive layer depends on the type of the fine particles and is generally from about 5 to about 70 parts by weight, and preferably from about 10 to about 50 parts by weight relative to 100 parts by weight of the base polymer constituting the pressure-sensitive adhesive layer (a base polymer of the pressure-sensitive adhesive).

The pressure-sensitive adhesive layer containing the fine particles does not necessarily require to be prepared by adding and dispersing fine particles to a pressure-sensitive adhesive and applying the resulting pressure-sensitive adhesive composition. It is enough that the resulting pressure-sensitive adhesive layer contains dispersed fine particles even though the pressure-sensitive adhesive composition is at first uniform. For example, when the pressure-sensitive adhesive layer is formed by applying a solvent-containing pressure-sensitive adhesive to a substrate, the pressure-sensitive adhesive layer containing fine particles can also be obtained in the following manner: A uniform pressure-sensitive adhesive composition containing components incorporated with each other, the solvent is removed by drying, and domains in the form of fine particles mainly containing a non-adhesive component are formed by phase separation. These domains in the form of fine particles such as in the island-in-sea structure are also included in the scope of the "fine particles" for use in the present invention.

More specifically, the pressure-sensitive adhesive layer containing fine particles can be prepared by adding a component to a pressure-sensitive adhesive composition before application, which component is soluble in the solvent for the application of the pressure-sensitive adhesive and becomes insoluble with the base polymer constituting the pressure-sensitive adhesive after application and drying. A typical example of such processes includes a process in which a crosslinking agent such as an isocyanate crosslinking agent is added to an acrylic pressure-sensitive adhesive in excess (e.g., from about 10 to about 30 parts by weight relative to 100 parts by weight of the acrylic polymer), and the resulting composition is applied to a substrate to thereby form the pressure-sensitive adhesive layer. Alternatively, a vinyl chloride resin, vinyl acetate resin, a copolymer thereof, or a vinyl chloride-methyl methacrylate copolymer is added to an acrylic or rubber pressure-sensitive adhesive, and the resulting composition is applied to a substrate to thereby form the pressure-sensitive adhesive layer.

The fine particles have a mean particle size of, for example, from about 0.01 to about 10 $\mu m$, and preferably from about 0.01 to about 5 $\mu m$. If the fine particles have a mean particle size of less than 0.01 $\mu m$, the resulting pressure-sensitive adhesive sheet has excessively high tackiness and becomes resistant to be peeled off from an article to be cleaned such as a screen printing plate. If the fine particles have a mean particle size exceeding 10 $\mu m$, the resulting

pressure-sensitive adhesive sheet may have excessively low tackiness and to thereby less effectively remove a solvent-containing substance such as a paste turned about the back of the screen printing plate.

In the sheet 5 for removal of a solvent-containing substance, the pressure-sensitive adhesive layer preferably has a tackiness (adhesive strength) of from about 50 to about 400 cN/25-mm, and more preferably from about 100 to about 350 cN/25-mm as determined by the method in conformity with JIS Z 0237, in which a SUS 430BA plate is used as a test plate, and the tackiness is measured after 1-minute contact-bonding of the pressure-sensitive adhesive sheet and the test plate. In general, the property for removing a paste decreases with a decreasing tackiness. However, the present invention can markedly decrease damage of the screen printing plate while maintaining the property for removing a paste at high level, since the tackiness of the pressure-sensitive adhesive layer is reduced by the addition or formation of the fine particles.

According to the invented sheet 5 for removal of a solvent-containing substance and removing method 5, the pressure-sensitive adhesive layer has a decreased apparent tackiness due to the presence of the fine particles in the pressure-sensitive adhesive layer even if the pressure-sensitive adhesive inherently has a high tackiness. The pressure-sensitive adhesive sheet can therefore peel off a solvent-containing substance such as a paste turned about the back of a screen printing plate from an article to be cleaned such as the screen printing plate with an appropriate force, while maintaining the property for removing the solvent-containing substance. Thus, the pressure-sensitive adhesive sheet does not damage the article to be cleaned.

In the invented sheet 6 for removal of a solvent-containing substance, when a pressure-sensitive adhesive layer is formed on a substrate, the configuration of the pressure-sensitive adhesive layer is the same as in those mentioned above. The tackiness (adhesive strength) of the pressure-sensitive adhesive layer can be appropriately set in consideration of the property for removing the solvent-containing substance and the peeling property of the pressure-sensitive adhesive sheet from the article to be treated (article to be cleaned), depending on the application thereof. The tackiness is preferably from about 10 to about 400 cN/25-mm, and more preferably from about 20 to about 350 cN/25-mm as determined by the method in conformity with JIS Z 0237, in which a SUS 430BA plate is used as a test plate, and the tackiness is measured after 1-minute contact-bonding of the pressure-sensitive adhesive sheet and the test plate.

When a foam layer is formed on a substrate in the invented sheet 6 for removal of a solvent-containing substance, resins for constituting the foam layer are not specifically limited as far as they are foamable resins. Such resins include, for example, rubbers, acrylic resins, urethane resins, olefinic resins, silicone resins, vinyl ether resins, styrenic resins, vinyl chloride resins, phenolic resins, urea resins, and epoxy resins. Among these resins, preferred are tacky resins such as rubbers (e.g., natural rubbers, styrene-butadiene copolymer rubbers, polyisobutylenes, butyl rubbers, reclaimed rubbers, rubber latex, styrene-isoprene-styrene block copolymers, polybutadienes, chloroprene rubbers, and acrylic rubbers), acrylic resins (e.g., acrylic resins each mainly containing a $C_2$-$C_{10}$ alkyl acrylate as a base monomer and having Tg of from about -20°C to about -70°C; and styrene-acrylic ester copolymers), urethane resins, olefinic resins (e.g., polyethylenes; polypropylenes; ethylene-propylene copolymers, ethylene-vinyl acetate copolymers, ethylene-acrylic ester copolymers, and other ethylenic copolymers), and silicone resins. The resins may be crosslinked. Each of these resins can be used alone or in combination.

The expansion ratio of the foam layer depends on the type of the resin and the process of foaming and is, for example, from about 1.2 to about 100 times. The foam layer may further comprise various additives such as plasticizers, antioxidants, flame retarders, UV absorbers, coloring agents, fillers, pressure-sensitive adhesives, tackifiers, and crosslinking agents.

The thickness of the foam layer can be appropriately selected within a range not deteriorating the strength and workability and is, for example, from about 0.05 to about 5 mm, and preferably from about 0.1 to about 2 mm. The sheet may further comprise a primer coat or other additional layers between the substrate and the foam layer. The foam layer may be formed on both sides of the substrate.

A surface of the foam layer preferably has such a tackiness that the sheet can adhere to an article to be treated such as a screen printing plate and can be easily peeled off from the article without significant resistance. In a preferred embodiment, the surface of the foam layer has a tackiness of, for example, from about 1 to 200 cN/25-mm as determined by the method in conformity with JIS Z 0237, in which a SUS 430BA plate is used as a test plate, and the tackiness is measured after 1-minute contact-bonding of the pressure-sensitive adhesive sheet and the test plate. The tackiness can be controlled by appropriately selecting the type of the resin constituting the foam layer, and the types and amounts of incorporated additives.

Of the invented sheets 6 for removal of a solvent-containing substance, the removing sheet having the foam layer on a substrate can be prepared by conventional foaming techniques such as extrusion foaming and injection foaming. Alternatively, the sheet can be prepared by applying a mixture containing a resin to constitute the foam layer and an appropriate foaming agent to a substrate, and heating and foaming the applied mixture. A foaming process can be appropriately selected, for example, depending on the type of the resin, from any processes. Such processes include a process in which the mixture is foamed by mechanical agitation (mechanical foaming), a process using a gas produced as a result of reaction, a process using a foaming agent (a volatile foaming agent or decomposable foaming agent), a process in which a soluble substance is removed, a process of foaming the mixture by spraying, a process in which a syntactic foam is formed, and a sintering process.

An important feature of the invented sheet 6 for removal of a solvent-containing substance is that the sheet for removal of a solvent-containing substance as mentioned above has been subjected to antistatic treatment. Processes for subjecting the sheet to antistatic treatment are not specifically limited and include, for example, (i) processes in which an electrically conductive layer is formed in at least one region selected from a surface on the substrate side, a surface on the pressure-sensitive adhesive layer side or foam layer side, and an interface between the substrate and the pressure-sensitive adhesive layer or foam layer, (ii) processes in which an agent for imparting electrical conductivity (e.g., an antistatic agent or electrically conductive substance) is added to a material constituting the substrate, (iii) processes in which a material itself constituting the substrate is composed of an electrically conductive substance, and (iv) processes in which an agent for imparting electrical conductivity (e.g., an antistatic agent or electrically conductive substance) is added to the pressure-sensitive adhesive layer or foam layer.

The processes (i) include, for example, a process in which a thin film layer of a metal, metal oxide or another electrically conductive substance is formed on a surface of, for example, the substrate by electroplating, electroless plating, vacuum deposition, sputtering, or ion plating; a process in which a metallic foil is laminated onto, for example, the substrate to thereby form a metal thin film layer; and a process in which a coat of a composition containing an agent for imparting electrical conductivity is applied to a surface of, for example, the substrate. The thickness of the electrically conductive layer can be appropriately set, for example, depending on the process for the formation of the electrically conductive layer.

The processes (ii) include, for example, a process in which an agent for imparting electrical conductivity is kneaded into a material constituting the substrate; and a process in which a material constituting the substrate is impregnated with a solution or dispersion containing an agent for imparting electrical conductivity. The processes (iii) include, for example, a process in which the substrate is composed of a metallic foil (e.g., a foil of copper, aluminium, nickel, iron, lead or silver). The processes (iv) include, for example, a resin composition containing a resin for constituting the pressure-sensitive adhesive layer or foam layer and an agent for imparting electrical conductivity is subjected to a conventional molding to thereby form the pressure-sensitive adhesive layer or foam layer; and a process in which an electrically conductive polymer is used as a resin for constituting the pressure-sensitive adhesive layer or foam layer.

Such agents for imparting electrical conductivity include, but are not limited to, copper, nickel, aluminium, iron, chromium, cobalt, antimony, molybdenum, silver, platinum, gold, and other metals or alloys of these metals (e.g., fine powders or fibers) ; carbon black and other carbons (e.g., powders or fibers); electrically conductive tin oxide, silica, zinc oxide and other inorganic oxides such as metal oxides; anionic antistatic agents (e.g., alkyl sulfate antistatic agents, alkyl aryl sulfate antistatic agents, alkyl phosphate antistatic agents, and alkylamine sulfate antistatic agents), cationic antistatic agents (e.g., quaternary ammonium salt antistatic agents, quaternary ammonium resin antistatic agents, and imidazoline antistatic agents), nonionic antistatic agents (e.g., sorbitan antistatic agents, ether antistatic agents, amine and amide antistatic agents, ethanolamide antistatic agents, and polyethylene glycol antistatic agents), amphoteric antistatic agents (e.g., betaine antistatic agents), and other surfactant-based antistatic agents; TCNQ (tetracyanoquinodimethane), polyene polymers (e.g., polyacetylene), aromatic polymers [e.g., poly(p-phenylene) and poly(2,6-naphthalene)], heterocyclic polymers [e.g., polypyrrole, poly(2,5-thienylene) and poly(pyridine-2,5-diyl)], hetero-chain polymers [e.g., poly(phenylene sulfide) and polyaniline], copolymerized polymers [e.g., copoly(phenylene/vinylene) and poly(dithienylpolyene)], ladder polymers (e.g., polyacenes), and other electrically conductive polymers (organic semiconductor polymers). Each of these agents for imparting electrical conductivity can be used alone or in combination.

The amount of the agent for imparting electrical conductivity can be appropriately selected depending on a process for subjecting the sheet for removal of a solvent-containing substance to antistatic treatment within a range not deteriorating film-forming property or other properties.

In the invented sheet 6 for removal of a solvent-containing substance, at least one (preferably both) of both sides of the sheet has a surface resistivity of preferably $10^{13}$ Ω or less (e.g., from about $10°$ Ω to about $10^{13}$ Ω) and more preferably $10^{11}$ Ω or less (e.g., from about $10°$ Ω to about $10^{11}$ Ω). The surface resistivity can be controlled by appropriately selecting, for example, the type and amount of the agent for imparting electrical conductivity.

According to the invented sheet 6 for removal of a solvent-containing substance and removing method 6, the pressure-sensitive adhesive layer or foam layer is formed at least on one side of the substrate, and the sheet can efficiently remove a solvent-containing substance by such an easy operation that the sheet is stuck to or pressed to and peeled off from the solvent-containing substance. Such solvent-containing substances include, for example, a paste (an ink) for use in screen printing or an ink deposited on a roll of a printing machine such as an offset printing machine. Additionally, the sheet has been subjected to antistatic treatment and can therefore prevent electrostatic buildup. Consequently, there is no need of static eliminators, malfunctions caused by static electricity are avoided, and yields and operating ratio of facilities are improved.

# EP 1 172 209 A1

Industrial Applicability

The invented sheets for removal of a solvent-containing substance can be used for cleaning of articles carrying deposited solvent-containing substances (specifically, semisolid substances). Such solvent-containing substances include, for example, a paste (an ink) deposited on a screen printing plate, an ink deposited on a roll of a printing machine such as an offset printing machine, an ink stain in the vicinity of an ink jet orifice of an ink jet printer, and a paint deposited on an article, floor or wall. The sheets are specifically suitable as cleaning sheets for removal of a paste (an ink) turned about the back of a screen printing plate.

According to the invented sheets for removal of a solvent-containing substance and removing methods, the sheets can reliably adhere to and remove solvent-containing substances and can highly efficiently remove these solvent-containing substances. Such solvent-containing substances include, for example, a paste turned about the back of a screen printing plate, an ink remained in a blanket cylinder of an offset printing machine, and an ink stain in the vicinity of an ink jet orifice of an ink jet printer.

In the invented sheet for removal of a solvent-containing substance and removing method, the pressure-sensitive adhesive layer can absorb at least a predetermined amount of a solvent and has extra absorptivity of the solvent, and the sheets can reliably adhere to and remove a solvent-containing substance deposited on an article to be treated, such as a paste turned about the back of a screen printing plate. According to the invented sheet for removal of a solvent-containing substance and removing method, the pressure-sensitive adhesive layer can absorb at least a predetermined amount of a solvent in a short time and has a tackiness within a specific range after absorbing the solvent, and the sheet can reliably and efficiently adhere to and remove a solvent-containing substance deposited on an article to be treated, such as a paste turned about the back of a screen printing plate. The invented sheet and removing method can therefore reduce imperfect printing due to bleeding in screen printing, can shorten the time of cleaning for rolls to thereby improve productivity in offset printing, gravure printing and flexographic printing.

The invented pressure-sensitive adhesive sheet and removing method have features in that the pressure-sensitive adhesive layer can absorb at least a predetermined amount of a solvent in a short time and that the components of the pressure-sensitive adhesive layer do not migrate into an adherend in a predetermined peel test after absorbing a predetermined amount of the solvent. Accordingly, the sheet and removing method can efficiently remove a solvent-containing substance deposited on an article to be treated and can avoid contamination or stain of a surface of the article to be treated with the components of the pressure-sensitive adhesive layer after removal of the solvent-containing substance. When, for example, a paste turned about the back of a screen printing plate is removed, a printed matter is not stained to thereby increase yields in printing.

According to the invented pressure-sensitive adhesive sheet for removal of a solvent-containing substance and removing method, the solubility parameter of a pressure-sensitive adhesive constituting the pressure-sensitive adhesive layer of the pressure-sensitive adhesive sheet is in a specific relation with the solubility parameter of a solvent contained in the solvent-containing substance to be removed, and the invented cleaning sheet therefore can rapidly absorb the solvent and can maintain its tackiness. Accordingly, the pressure-sensitive adhesive sheet can reliably adhere to and remove solvent-containing substances deposited on, for example, machines or floors, without broadening stains toward surroundings and without damaging the article to be cleaned. Additionally, the invented sheet and removing method can easily clean an article to be cleaned without damaging the article and without broadening stains toward surroundings and can be applied to a wide variety of articles to be cleaned and solvent-containing substances (deposits) to be removed. The invented pressure-sensitive adhesive sheet and removing method can therefore realize cleaning operations using pressure-sensitive adhesive sheets in printing and painting processes, which cleaning operations have been performed only by wiping with wastes (wiping rags). The invented removing method can rapidly select and use an optimum pressure-sensitive adhesive sheet depending on the type of a solvent contained in the solvent-containing substance deposited on an article to be cleaned, without subjecting a variety of pressure-sensitive adhesive sheets to actual testing.

In the invented pressure-sensitive adhesive sheet for removal of a solvent-containing substance and removing method, the pressure-sensitive adhesive layer comprises fine particles. Accordingly, the pressure-sensitive adhesive sheet can have an appropriately controlled tackiness, can satisfactorily remove a solvent-containing substance such as a paste turned about the back of a screen printing plate and can peel off the solvent-containing substance without damaging an article to be cleaned such as the screen printing plate.

The invented sheet for removal of a solvent-containing substance and removing method can efficiently remove a solvent-containing substance such as a paste turned about the back of a screen printing plate while preventing electrostatic buildup. Consequently, there is no need of static eliminators, malfunctions caused by static electricity are avoided, and yields and operating ratio of facilities are improved.

EXAMPLES

The present invention will be illustrated in further detail with reference to several examples below, which are not intended to limit the scope of the invention. Figures within parentheses after the name of a solvent in Examples 13 and 14 are solubility parameters (SPs) [ $(J/cm^3)^{1/2}$].

EXAMPLE 1

A pressure-sensitive adhesive sheet was prepared by applying an acrylic pressure-sensitive adhesive to a thickness after drying of 10 μm to one side of a polyethylene film (substrate) 0.06 mm thick, and drying the applied acrylic pressure-sensitive adhesive. The acrylic pressure-sensitive adhesive was composed of 100 parts by weight of a copoly(butyl acrylate/acrylonitrile/acrylic acid) (weight ratio: 90/10/2) and 15 parts by weight of an isocyanate crosslinking agent.

The pressure-sensitive adhesive sheet before use had a tackiness (adhesive strength) of 140 cN/25-mm as determined by the method in conformity with JIS Z 0237, in which a SUS 430BA plate was used as a test plate, and the tackiness was measured after 1-minute contact-bonding of the pressure-sensitive adhesive sheet with the test plate.

The above-prepared pressure-sensitive adhesive sheet was cut to a size of 30 mm times 30 mm (30 mm x 30 mm), was weighed, was immersed in a solvent [diethylene glycol monobutyl ether acetate/diethylene glycol monobutyl ether (weight ratio: 9/1)] for 3 minutes, was taken out from the solvent, the solvent deposited on a surface of the sheet was immediately wiped off with a waste rag, the sheet was then weighed again, and the solvent absorption per unit area was calculated to find to be 35 g/m².

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could be satisfactorily peeled off from the screen printing plate and could fully remove the turned-about paste.

EXAMPLE 2

A pressure-sensitive adhesive sheet was prepared by applying an acrylic pressure-sensitive adhesive to a thickness after drying of 5 μm to one side of a polypropylene/polyethylene (weight ratio: 90/10) blend film (substrate) 0.04 mm thick, and drying the applied acrylic pressure-sensitive adhesive. The acrylic pressure-sensitive adhesive was composed of 100 parts by weight of a copoly(butyl acrylate/acrylonitrile/acrylic acid) (weight ratio: 90/10/2), 7 parts by weight of a terpene phenol tackifier, 3 parts by weight of an isocyanate crosslinking agent, and 1 part by weight of a phosphate surfactant.

The tackiness before use and solvent absorption of the above-prepared pressure-sensitive adhesive sheet were 150 cN/25-mm and 33 g/m², respectively, as determined in the same manner as in Example 1.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could be satisfactorily peeled off from the screen printing plate and could fully remove the turned-about paste.

EXAMPLE 3

A pressure-sensitive adhesive sheet was prepared by applying an acrylic pressure-sensitive adhesive to a thickness after drying of 10 μm to one side of a polyethylene film (substrate) 0.06 mm thick, and drying the applied acrylic pressure-sensitive adhesive. The acrylic pressure-sensitive adhesive was composed of 100 parts by weight of a copoly(butyl acrylate/acrylic acid) (weight ratio: 96/4) and 15 parts by weight of an isocyanate crosslinking agent.

The tackiness before use and solvent absorption of the above-prepared pressure-sensitive adhesive sheet were 180 cN/25-mm and 25 g/m², respectively, as determined in the same manner as in Example 1.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could be satisfactorily peeled off from the screen printing plate and could fully remove the turned-about paste.

EXAMPLE 4

A pressure-sensitive adhesive sheet was prepared by applying an acrylic pressure-sensitive adhesive to a thickness after drying of 10 μm to one side of a polyethylene film (substrate) 0.06 mm thick, and drying the applied acrylic pressure-sensitive adhesive. The acrylic pressure-sensitive adhesive was composed of 100 parts by weight of a copoly(butyl acrylate/acrylonitrile/acrylic acid) (weight ratio: 90/10/2) and 0.5 part by weight of an epoxy crosslinking agent.

The tackiness before use and solvent absorption of the above-prepared pressure-sensitive adhesive sheet were 140 cN/25-mm and 28 g/m$^2$, respectively, as determined in the same manner as in Example 1.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could be satisfactorily peeled off from the screen printing plate and could fully remove the turned-about paste.

COMPARATIVE EXAMPLE 1

A pressure-sensitive adhesive sheet was prepared by applying an acrylic pressure-sensitive adhesive to a thickness after drying of 10 μm to one side of a polyethylene film (substrate) 0.06 mm thick, and drying the applied acrylic pressure-sensitive adhesive. The acrylic pressure-sensitive adhesive was composed of 100 parts by weight of a copoly(butyl acrylate/ acrylic acid) (weight ratio: 96/4), 8 parts by weight of a rosin tackifier, and 2 parts by weight of an epoxy crosslinking agent.

The tackiness before use and solvent absorption of the above-prepared pressure-sensitive adhesive sheet were 110 cN/25-mm and 15 g/m$^2$, respectively, as determined in the same manner as in Example 1.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could be peeled off from the screen printing plate without problems, but the paste was remained on the back of the screen printing plate.

COMPARATIVE EXAMPLE 2

A pressure-sensitive adhesive sheet was prepared by applying polyisobutylene as a pressure-sensitive adhesive to a thickness after drying of 7 μm to one side of a polypropylene/polyethylene (weight ratio: 90/10) blend film (substrate) 0.04 mm thick, and drying the applied pressure-sensitive adhesive.

The tackiness before use and solvent absorption of the above-prepared pressure-sensitive adhesive sheet were 500 cN/25-mm and 1 g/m$^2$, respectively, as determined in the same manner as in Example 1.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could be neither satisfactorily peeled off from the screen printing plate nor sufficiently remove the turned-about paste.

EXAMPLE 5

A pressure-sensitive adhesive sheet was prepared by applying an acrylic pressure-sensitive adhesive to a thickness after drying of 10 μm to one side of a polyethylene film (substrate) 0.06 mm thick, and drying the applied acrylic pressure-sensitive adhesive. The acrylic pressure-sensitive adhesive was composed of 100 parts by weight of a copoly(butyl acrylate/acrylonitrile/acrylic acid) (weight ratio: 90/10/2) and 15 parts by weight of an isocyanate crosslinking agent.

The tackiness before use of the pressure-sensitive adhesive sheet was 140 cN/25-mm (140 gf/25-mm) as determined by the method in conformity with JIS Z 0237, in which a SUS 430BA plate was used as a test plate and the tackiness was measured after 1-minute contact-bonding of the pressure-sensitive adhesive sheet and the test plate. The above-prepared pressure-sensitive adhesive sheet was cut to a size of 30 mm times 30 mm (30 mm x 30 mm), was weighed, was immersed in a solvent [diethylene glycol monobutyl ether acetate/diethylene glycol monobutyl ether (weight ratio: 9/1)] for 1 second, was taken out from the solvent, the solvent deposited on a surface of the sheet was immediately wiped off with a waste rag, the sheet was then weighed again, and the solvent absorption per unit area was calculated to find to be 10 g/m$^2$. Separately, 5 g/m$^2$ of the solvent was applied to a poly(ethylene terephthalate) film using a wire bar, the pressure-sensitive adhesive sheet having the same size as above was stuck to the film carrying the solvent to thereby permit the pressure-sensitive adhesive layer of the pressure-sensitive adhesive sheet to absorb 5 g/m$^2$ of the solvent, and the tackiness of the pressure-sensitive adhesive sheet was then determined in the same manner as above to find to be 5 cN/25-mm (5 gf/25-mm).

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could be satisfactorily peeled off from the screen printing plate and could fully remove the turned-about paste.

EXAMPLE 6

A pressure-sensitive adhesive sheet was prepared by applying an acrylic pressure-sensitive adhesive to a thickness after drying of 5 μm to one side of a polypropylene/polyethylene (weight ratio: 90/10) blend film (substrate) 0.04 mm thick, and drying the applied acrylic pressure-sensitive adhesive. The acrylic pressure-sensitive adhesive was composed of 100 parts by weight of a copoly(butyl acrylate/acrylonitrile/acrylic acid) (weight ratio: 90/10/2), 7 parts by weight of a terpene phenol tackifier, 3 parts by weight of an isocyanate crosslinking agent, and 1 part by weight of a phosphate surfactant.

The tackiness before use, solvent absorption and tackiness after absorbing the solvent of the above-prepared pressure-sensitive adhesive sheet were 150 cN/25-mm (150 gf/25-mm), 17 g/m$^2$ and 3 cN/25-mm (3 gf/25-mm), respectively, as determined in the same manner as in Example 5.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could be satisfactorily peeled off from the screen printing plate and could fully remove the turned-about paste.

EXAMPLE 7

A pressure-sensitive adhesive sheet was prepared by applying an acrylic pressure-sensitive adhesive to a thickness after drying of 15 μm to one side of a polyethylene film (substrate) 0.06 mm thick, and drying the applied acrylic pressure-sensitive adhesive. The acrylic pressure-sensitive adhesive was composed of 100 parts by weight of a copoly(2-ethylhexyl acrylate/vinyl acetate/acrylic acid) (weight ratio: 60/30/5), 30 parts by weight of a terpene phenol tackifier, 7 parts by weight of an isocyanate crosslinking agent, and 1 part by weight of a phosphate surfactant.

The tackiness before use, solvent absorption and tackiness after absorbing the solvent of the above-prepared pressure-sensitive adhesive sheet were 130 cN/25-mm (130 gf/25-mm), 19 g/m$^2$ and 31 cN/25-mm (32 gf/25-mm), respectively, as determined in the same manner as in Example 5.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could be satisfactorily peeled off from the screen printing plate and could fully remove the turned-about paste.

COMPARATIVE EXAMPLE 3

A pressure-sensitive adhesive sheet was prepared by applying an acrylic pressure-sensitive adhesive to a thickness after drying of 10 μm to one side of a polyethylene film (substrate) 0.06 mm thick, and drying the applied acrylic pressure-sensitive adhesive. The acrylic pressure-sensitive adhesive was composed of 100 parts by weight of a copoly(butyl acrylate/acrylic acid) (weight ratio: 96/4), 8 parts by weight of a rosin tackifier, and 5 parts by weight of an epoxy crosslinking agent.

The tackiness before use, solvent absorption and tackiness after absorbing the solvent of the above-prepared pressure-sensitive adhesive sheet were 110 cN/25-mm (110 gf/25-mm), 9 g/m$^2$ and 0 cN/25-mm (0 gf/25-mm), respectively, as determined in the same manner as in Example 5.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could be peeled off from the screen printing plate without problems, but the paste was remained on the back of the screen printing plate.

COMPARATIVE EXAMPLE 4

A pressure-sensitive adhesive sheet was prepared by applying polyisobutylene as a pressure-sensitive adhesive to a thickness after drying of 7 μm to one side of a polypropylene/polyethylene (weight ratio: 90/10) blend film (substrate) 0.04 mm thick, and drying the applied pressure-sensitive adhesive.

The tackiness before use, solvent absorption and tackiness after absorbing the solvent of the above-prepared pressure-sensitive adhesive sheet were 490 cN/25-mm (500 gf/25-mm), 1 g/m$^2$ and 0 cN/25-mm (0 gf/25-mm), respectively, as determined in the same manner as in Example 5.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could neither be satisfactorily peeled off from the screen printing plate nor sufficiently remove the turned-about paste.

EXAMPLE 8

A pressure-sensitive adhesive sheet was prepared in the same manner as in Example 5 and was then cut to a size of 30 mm times 30 mm (30 mm x 30 mm), was weighed, was immersed in a solvent [toluene/ethyl acetate/methyl ethyl ketone (weight ratio: 20/40/40)] for 1 second, was taken out from the solvent, the solvent deposited on a surface of the sheet was immediately wiped off with a waste rag, the sheet was then weighed again, and the solvent absorption per unit area was calculated to find to be 15 g/m$^2$. Separately, 5 g/m$^2$ of the solvent was applied to a poly(ethylene terephthalate) film using a wire bar, the pressure-sensitive adhesive sheet having the same size as above was stuck to the film carrying the solvent to thereby permit the pressure-sensitive adhesive layer of the pressure-sensitive adhesive sheet to absorb 5 g/m$^2$ of the solvent, and the tackiness of the pressure-sensitive adhesive sheet was determined in the same manner as above to find to be 20 cN/25-mm.
The pressure-sensitive adhesive sheet was then stuck to and peeled off from a plate cylinder of a gravure printing machine, which carried a remained ink containing the solvent. As a result, the pressure-sensitive adhesive sheet could be satisfactorily peeled off from the plate cylinder and could fully remove the ink.

EXAMPLE 9

A pressure-sensitive adhesive sheet was prepared in the same manner as in Example 6. The solvent absorption and the tackiness after absorbing the solvent of the pressure-sensitive adhesive sheet were 20 g/m$^2$ and 5 cN/25-mm, respectively, as determined in the same manner as in Example 8.
The pressure-sensitive adhesive sheet was then stuck to and peeled off from a plate cylinder of a gravure printing machine in the same manner as in Example 8, which plate cylinder carried a remained ink containing the solvent. As a result, the pressure-sensitive adhesive sheet could be satisfactorily peeled off from the plate cylinder and could fully remove the ink.

EXAMPLE 10

A pressure-sensitive adhesive sheet was prepared in the same manner as in Example 7. The solvent absorption and the tackiness after absorbing the solvent of the pressure-sensitive adhesive sheet were 30 g/m$^2$ and 43 cN/25-mm, respectively, as determined in the same manner as in Example 8.
The pressure-sensitive adhesive sheet was then stuck to and peeled off from a plate cylinder of a gravure printing machine in the same manner as in Example 8, which plate cylinder carried a remained ink containing the solvent. As a result, the pressure-sensitive adhesive sheet could be satisfactorily peeled off from the plate cylinder and could fully remove the ink.

COMPARATIVE EXAMPLE 5

A pressure-sensitive adhesive sheet was prepared in the same manner as in Comparative Example 3. The solvent absorption and the tackiness after absorbing the solvent of the pressure-sensitive adhesive sheet were 15 g/m$^2$ and 0 cN/25-mm, respectively, as determined in the same manner as in Example 8.
The pressure-sensitive adhesive sheet was then stuck to and peeled off from a plate cylinder of a gravure printing machine in the same manner as in Example 8, which plate cylinder carried a remained ink containing the solvent. As a result, the pressure-sensitive adhesive sheet could be peeled off from the plate cylinder without problems, but the ink was remained on the plate cylinder.

EXAMPLE 11

A pressure-sensitive adhesive sheet was prepared in the same manner as in Comparative Example 4. The solvent absorption and the tackiness after absorbing the solvent of the pressure-sensitive adhesive sheet were 7 g/m$^2$ and 5 cN/25-mm, respectively, as determined in the same manner as in Example 8.
The pressure-sensitive adhesive sheet was then stuck to and peeled off from a plate cylinder of a gravure printing machine in the same manner as in Example 8, which plate cylinder carried a remained ink containing the solvent. As a result, the pressure-sensitive adhesive sheet could be satisfactorily peeled off from the plate cylinder and could fully remove the ink.

EXAMPLE 12

A pressure-sensitive adhesive sheet was prepared by applying an acrylic pressure-sensitive adhesive to a thickness after drying of 10 μm to one side of a polyethylene film (substrate) 0.06 mm thick, and drying the applied acrylic pressure-sensitive adhesive. The acrylic pressure-sensitive adhesive was composed of 100 parts by weight of a copoly(butyl acrylate/acrylonitrile/acrylic acid) (weight ratio: 90/10/2) and 15 parts by weight of an isocyanate crosslinking agent.

The above-prepared pressure-sensitive adhesive sheet was cut to a size of 30 mm times 30 mm (30 mm x 30 mm), was weighed, was immersed in a solvent [diethylene glycol monobutyl ether acetate/diethylene glycol monobutyl ether (weight ratio: 9/1)] for 1 second, was taken out from the solvent, the solvent deposited on a surface of the sheet was immediately wiped off with a waste rag, the sheet was then weighed again, and the solvent absorption per unit area was calculated to find to be 10 g/m$^2$. Separately, 5 g/m$^2$ of the solvent was applied to a poly(ethylene terephthalate) film using a wire bar, the pressure-sensitive adhesive sheet having the same size as above was stuck to the film carrying the solvent to thereby permit the pressure-sensitive adhesive layer of the pressure-sensitive adhesive sheet to absorb 5 g/m$^2$ of the solvent, the pressure-sensitive adhesive sheet was then stuck to a stainless steel plate (a SUS 430BA plate) by a reciprocating motion of a 2-kg rubber roller and was peeled off without delay. As a result, no stain was observed in the stainless steel plate.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could be satisfactorily peeled off from the screen printing plate and could fully remove the turned-back paste without any stain observed in the screen printing plate.

EXAMPLE 13

A pressure-sensitive adhesive sheet was prepared by applying an acrylic pressure-sensitive adhesive to a thickness after drying of 5 μm to one side of a polypropylene/polyethylene (weight ratio: 90/10) blend film (substrate) 0.04 mm thick, and drying the applied acrylic pressure-sensitive adhesive. The acrylic pressure-sensitive adhesive was composed of 100 parts by weight of a copoly(butyl acrylate/acrylonitrile/acrylic acid) (weight ratio: 90/10/2), 7 parts by weight of a terpene phenol tackifier, and 3 parts by weight of an isocyanate crosslinking agent.

The solvent absorption of the pressure-sensitive adhesive sheet was 17 g/m$^2$ as determined in the same manner as in Example 12. After permitting the pressure-sensitive adhesive layer of the pressure-sensitive adhesive sheet to absorb 5 g/m$^2$ of the solvent, the pressure-sensitive adhesive sheet was stuck to a stainless steel plate (a SUS 430BA plate) by a reciprocating motion of a 2-kg rubber roller and was peeled off without delay in the same manner as in Example 12. As a result, no stain was observed in the stainless steel plate.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could fully remove the turned-back paste without any stain observed in the screen printing plate.

COMPARATIVE EXAMPLE 6

A pressure-sensitive adhesive sheet was prepared by applying an acrylic pressure-sensitive adhesive to a thickness after drying of 10 μm to one side of a polyethylene film (substrate) 0.06 mm thick, and drying the applied acrylic pressure-sensitive adhesive. The acrylic pressure-sensitive adhesive was composed of 100 parts by weight of a copoly(butyl acrylate/acrylic acid) (weight ratio: 96/4) and 5 parts by weight of an epoxy crosslinking agent.

The solvent absorption of the pressure-sensitive adhesive sheet was 9 g/m$^2$ as determined in the same manner as in Example 12. After permitting the pressure-sensitive adhesive layer of the pressure-sensitive adhesive sheet to absorb 5 g/m$^2$ of the solvent, the pressure-sensitive adhesive sheet was stuck to a stainless steel plate (a SUS 430BA plate) by a reciprocating motion of a 2-kg rubber roller and was peeled off without delay in the same manner as in Example 12. As a result, a stain was observed in the stainless steel plate.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could be peeled off from the screen printing plate without problems, but the paste was remained on the back of the screen printing plate.

COMPARATIVE EXAMPLE 7

A pressure-sensitive adhesive sheet was prepared by applying polyisobutylene as a pressure-sensitive adhesive to a thickness after drying of 7 $\mu$m to one side of a polypropylene/polyethylene (weight ratio: 90/10) blend film (substrate) 0.04 mm thick, and drying the applied pressure-sensitive adhesive.

The solvent absorption of the pressure-sensitive adhesive sheet was 1 $g/m^2$ as determined in the same manner as in Example 12. After permitting the pressure-sensitive adhesive layer of the pressure-sensitive adhesive sheet to absorb 5 $g/m^2$ of the solvent, the pressure-sensitive adhesive sheet was stuck to a stainless steel plate (a SUS 430BA plate) by a reciprocating motion of a 2-kg rubber roller and was peeled off without delay in the same manner as in Example 12. As a result, a stain was observed in the stainless steel plate.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could not sufficiently remove the turned-about paste.

COMPARATIVE EXAMPLE 8

A pressure-sensitive adhesive sheet was prepared by applying an acrylic pressure-sensitive adhesive to a thickness after drying of 10 $\mu$m to one side of a polyethylene film (substrate) 0.06 mm thick, and drying the applied acrylic pressure-sensitive adhesive. The acrylic pressure-sensitive adhesive was composed of 100 parts by weight of a copoly(butyl acrylate/acrylonitrile/acrylic acid) (weight ratio: 90/10/2).

The solvent absorption of the pressure-sensitive adhesive sheet was 40 $g/m^2$ as determined in the same manner as in Example 12. After permitting the pressure-sensitive adhesive layer of the pressure-sensitive adhesive sheet to absorb 5 $g/m^2$ of the solvent, the pressure-sensitive adhesive sheet was stuck to a stainless steel plate (a SUS 430BA plate) by a reciprocating motion of a 2-kg rubber roller and was peeled off without delay in the same manner as in Example 12. As a result, a stain was observed in the stainless steel plate. The stain was analyzed to find to be a mixture of the solvent and the pressure-sensitive adhesive polymer.

The pressure-sensitive adhesive sheet was then stuck to and peeled off from the back of a screen printing plate, which had been used a predetermined number of times and carried a paste (a fluorescent paste for use in the manufacture of a plasma display panel) turned about the back. As a result, the pressure-sensitive adhesive sheet could remove the turned-about paste without problems, but a stain was observed in the screen printing plate. The stain was analyzed to find to be the pressure-sensitive adhesive polymer swelled by action of the solvent.

EXAMPLE 14

(1) Determination of Solubility Parameter (SP) $\delta_1$ of Pressure-sensitive Adhesive

A cleaning sheet was prepared by forming a pressure-sensitive adhesive layer 10 $\mu$m thick on one side of a polyethylene film (substrate) 0.06 mm thick. The pressure-sensitive adhesive layer was composed of an acrylic pressure-sensitive adhesive containing 100 parts by weight of a copoly(butyl acrylate/acrylic acid) (weight ratio: 95/5) 'and 15 parts by weight of an isocyanate crosslinking agent.

About 0.5 g of each of samples obtained by cutting the pressure-sensitive adhesive of the cleaning sheet was accurately weighed, and the weighed samples were immersed respectively in n-heptane (15.1), cyclohexane (16.8), toluene (18.1), ethyl acetate (18.6), methyl ethyl ketone (19.0), cyclohexanone (20.3), and isobutyl alcohol (21.5) at room temperature for 7 days. The degree of swelling (%) and gel fraction (%) of the pressure-sensitive adhesive constituting the pressure-sensitive layer in each sample were determined according to the aforementioned procedure. The results are shown in Table 1.

## Table 1

| Solvent | n-Heptane | Cyclohexane | Toluene | Ethyl acetate |
|---|---|---|---|---|
| SP [$(J/cm^3)^{1/2}$] | 15.1 | 16.8 | 18.1 | 18.6 |
| Degree of Swelling (%) | 245 | 293 | 976 | 1420 |
| Gel Fraction (%) | 97.8 | 98.0 | 86.7 | 81.4 |

## Table 1-continued

| Solvent | Methyl ethyl ketone | Cyclohexanone | Isobutyl alcohol |
|---|---|---|---|
| SP [$(J/cm^3)^{1/2}$] | 19.0 | 20.3 | 21.5 |
| Degree of Swelling (%) | 1440 | 973 | 347 |
| Gel Fraction (%) | 78.5 | 99.8 | 99.0 |

Table 1 shows that the solubility parameter (SP) (typical) of the pressure-sensitive adhesive constituting the pressure-sensitive adhesive layer of cleaning sheet was defined as 19.0 [ $(J/cm^3)^{1/2}$] (i.e., SP of a solvent in which the pressure-sensitive adhesive exhibited the maximum degree of swelling).

(2) Determination of Tackiness (180 degree peel strength) of Cleaning Sheet

About 5 $g/m^2$ of each of the following seven high boiling solvents was applied onto a surface of a substrate [a poly(ethylene terephthalate) (PET) film 38 μm thick] using a Meyer bar #04, and the above-prepared cleaning sheet was stuck thereto, and the peel strength was determined according to the method described in JIS Z 0237, in which a stainless steel plate (a SUS 430 BA plate) was used as an adherend and the peel strength was measured after 1-minute contact-bonding of the cleaning sheet and the adherend. The results are shown in Table 2.

Used solvents: dodecane (16.2), decahydronaphthalene (18.0), diethyl phthalate (18.2), diethylene glycol monobutyl ether acetate (19.2), dibenzyl ether (20.5), diethylene glycol monobutyl ether (21.5), and 1,4-butanediol (24.8)

## Table 2

| Solvent | Dodecane | Decahydro-naph thalene | Diethyl phthalate | Diethylene glycol monobutyl ether acetate |
|---|---|---|---|---|
| SP [ (J/cm³)^(1/2) ] | 16.2 | 18.0 | 18.2 | 19.2 |
| 180° Peel strength (cN/20 mm) | 0.5 | 4 | 5 | 5 |

## Table 2-continued

| Solvent | Dibenzyl ether | Diethylene glycol monobutyl ether | 1,4-Butanediol |
|---|---|---|---|
| SP [ (J/cm³)^(1/2) ] | 20.5 | 21.5 | 24.8 |
| 180° Peel strength (cN/20 mm) | 9 | 8 | 0 |

Table 2 shows that, when the cleaning sheet was stuck to a region wetted with a solvent having a solubility parameter within a range of $\pm 4$ [ $(J/cm^3)^{1/2}$] with respect to the solubility parameter (SP) (=19.0 [ $(J/cm^3)^{1/2}$]) of the pressure-sensitive adhesive of the pressure-sensitive adhesive layer of the cleaning sheet, the cleaning sheet after sticking exhibited a tackiness exceeding 0, indicating that the tackiness (adhesion) was maintained. Accordingly, this cleaning sheet can effectively clean off deposits containing solvents having solubility parameters within the above range.

EXAMPLE 15

(1) Determination of Solubility Parameter (SP) $\delta_1$ of Pressure-sensitive Adhesive

A cleaning sheet was prepared by forming a pressure-sensitive adhesive layer 10 $\mu$m thick composed of polyisobutylene on one side of a polyethylene film (substrate) 0.06 mm thick.

Using the above-prepared cleaning sheet, the degree of swelling (%) and gel fraction (%) were determined according to the aforementioned procedure. The results are shown in Table 3.

Table 3

| Solvent | n-Heptane | Cyclohexane | Toluene | Ethyl acetate |
|---|---|---|---|---|
| SP $[(J/cm^3)^{1/2}]$ | 15.1 | 16.8 | 18.1 | 18.6 |
| Degree of Swelling (%) | 870 | 1190 | 890 | 715 |
| Gel Fraction (%) | 63.0 | 64.0 | 65.5 | 69.5 |

Table 3-continued

| Solvent | Methyl ethyl ketone | Cyclohexanone | Isobutyl alcohol |
|---|---|---|---|
| SP $[(J/cm^3)^{1/2}]$ | 19.0 | 20.3 | 21.5 |
| Degree of Swelling (%) | 688 | 700 | 770 |
| Gel Fraction (%) | 70.8 | 92.0 | 94.0 |

Table 3 shows that the solubility parameter (SP) (typical) of the pressure-sensitive adhesive constituting the pressure-sensitive adhesive layer of the cleaning sheet was defined as 16.8 $[(J/cm^3)^{1/2}]$ (i.e., SP of a solvent in which the pressure-sensitive adhesive exhibited the maximum degree of swelling).

(2) Determination of Tackiness (180 degree peel strength) of Cleaning Sheet

The tackiness (180 degree peel strength) of the cleaning sheet was determined in the same manner as in Example 14. The results are shown in Table 4.

Table 4

| Solvent | Dodecane | Decahydro-naphthalene | Diethyl phthalate | Diethylene glycol monobutyl ether acetate |
|---|---|---|---|---|
| SP [$(J/cm^3)^{1/2}$] | 16.2 | 18.0 | 18.2 | 19.2 |
| 180° Peel strength (cN/20-mm) | 3 | 1 | 1 | 0.5 |

Table 4-continued

| Solvent | Dibenzyl ether | Diethylene glycol monobutyl ether | 1,4-Butanediol |
|---|---|---|---|
| SP [$(J/cm^3)^{1/2}$] | 20.5 | 21.5 | 24.8 |
| 180° Peel strength (cN/20-mm) | 0.5 | 0 | 0 |

Table 4 shows that, when the cleaning sheet was stuck to a region wetted with a solvent having a solubility parameter within a range of ±4 [ $(J/cm^3)^{1/2}$] with respect to the solubility parameter (SP) (=16.8 [ $(J/cm^3)^{1/2}$]) of the pressure-sensitive adhesive of the pressure-sensitive adhesive layer of the cleaning sheet, the cleaning sheet after sticking exhibited a tackiness exceeding 0, indicating that the tackiness (adhesion) was maintained. Accordingly, this cleaning sheet can effectively clean off deposits containing solvents having solubility parameters within the above range.

EXAMPLE 16

A pressure-sensitive adhesive sheet was prepared by applying a pressure-sensitive adhesive composition to a thickness after drying of 10 μm to one side of a polyethylene film (substrate) 0.06 mm thick, and drying the applied pressure-sensitive adhesive composition. The pressure-sensitive adhesive composition was composed of 100 parts by weight of an acrylic polymer [a copoly(butyl acrylate/acrylonitrile/acrylic acid) (weight ratio: 90/10/2)] and 20 parts by weight of dispersed fine particles of poly(methyl methacrylate) having a mean particle size of from 1 to 2 μm.
The tackiness of the pressure-sensitive adhesive sheet was 2.3 N/25-mm as determined by the method in conformity with JIS Z 0237, in which a SUS 430BA plate was used as a test plate and the tackiness was measured after 1-minute contact-bonding of the pressure-sensitive adhesive sheet and the test plate.

EXAMPLE 17

A pressure-sensitive adhesive sheet was prepared by applying a pressure-sensitive adhesive composition to a thickness after drying of 10 μm to one side of a polypropylene/polyethylene (weight ratio: 90/10) blend film (substrate) 0.04 mm thick, and drying the applied pressure-sensitive adhesive composition. The pressure-sensitive adhesive composition was composed of 100 parts by weight of an acrylic copolymer [a copoly(butyl acrylate/acrylonitrile/acrylic acid) (weight ratio: 90/10/2) and 17 parts by weight of an isocyanate crosslinking agent. The isocyanate crosslinking agent was not in the form of a fine particle, but a myriad of domains each having a size of 0.01 micrometers to several micrometers was observed in the resulting pressure-sensitive adhesive layer.
The tackiness of the above-prepared pressure-sensitive adhesive sheet was 2.0 N/25-mm as determined in the same manner as in Example 16.

EXAMPLE 18

A pressure-sensitive adhesive sheet was prepared by applying a pressure-sensitive adhesive composition to a thickness after drying of 20 μm to one side of a polyethylene film (substrate) 0.06 mm thick, and drying the applied pressure-sensitive adhesive composition. The pressure-sensitive adhesive composition was composed of 100 parts by weight of an acrylic polymer [a copoly(butyl acrylate/acrylic acid) (weight ratio: 96/4)] and 30 parts by weight of dispersed melamine fine particles having a mean particle size of from 1 to 2 μm.

The tackiness of the above-prepared pressure-sensitive adhesive sheet was 2.5 N/25-mm as determined in the same manner as in Example 16.

COMPARATIVE EXAMPLE 9

A pressure-sensitive adhesive sheet was prepared by applying an acrylic polymer as a pressure-sensitive adhesive to a thickness after drying of 10 μm to one side of a polyethylene film (substrate) 0.06 mm thick, and drying the applied acrylic polymer. The acrylic polymer was a copoly(butyl acrylate/acrylonitrile/acrylic acid (weight ratio: 90/10/2).

The tackiness of the above-prepared pressure-sensitive adhesive sheet was 5.0 N/25-mm as determined in the same manner as in Example 16.

COMPARATIVE EXAMPLE 10

A pressure-sensitive adhesive sheet was prepared by applying an acrylic polymer as a pressure-sensitive adhesive to a thickness after drying of 20 μm to one side of a polypropylene/polyethylene (weight ratio: 90/10) blend film (substrate) 0.04 mm thick, and drying the applied acrylic polymer. The acrylic polymer was a copoly(butyl acrylate/ acrylic acid) (weight ratio: 96/4).

The tackiness of the above-prepared pressure-sensitive adhesive sheet was 7.5 N/25-mm as determined in the same manner as in Example 16.

Evaluation Test

Each of the pressure-sensitive adhesive sheets obtained according to Examples 16 to 18 and Comparative Examples 9 and 10 was stuck to and peeled off from the back of a screen printing plate, which had been used a predetermined number of times and carried a paste (a fluorescent paste for use in the manufacture of a plasma display panel) turned about the back. Whether be smoothly peeled off from the screen printing plate (releasability) and whether each pressure-sensitive adhesive sheet could satisfactorily remove the turned-about paste (removing property) were evaluated according to the following criteria. The results are shown in Table 5.

(1) Releasability from Screen Printing Plate

Good: The sheet could be easily peeled off without damaging the screen printing plate.

Poor: An emulsion of the screen printing plate was peeled off from the screen printing plate when the sheet was peeled off.

(2) Property for Removing Turned-about Paste

Good: The turned-about paste could be fully removed.

Poor: The turned-about paste could not be sufficiently removed.

Table 5

|  | Ex. 16 | Ex. 17 | Ex. 18 | Com. Ex. 9 | Com. Ex. 10 |
|---|---|---|---|---|---|
| Tackiness (cN/25-mm) | 230 | 200 | 250 | 500 | 750 |
| Releasability* | good | good | good | poor | poor |
| Removing Property** | good | good | good | good | good |

Releasabilty*: Releasability from the screen printing plate

Removing Property**: Property for removing the turned-about paste

EXAMPLE 19

A cleaning pressure-sensitive adhesive sheet was prepared by applying an antistatic agent containing a nonionic surfactant to one side of a polyethylene film (substrate) 0.06 mm thick to thereby subject the side to antistatic treatment; applying an acrylic pressure-sensitive adhesive to the other side to a thickness after drying of 10 μm; and

drying the applied acrylic pressure-sensitive adhesive. The acrylic pressure-sensitive adhesive was composed of 100 parts by weight of a copoly(butyl acrylate/acrylic acid (weight ratio: 95/5) and 15 parts by weight of an isocyanate crosslinking agent.

The tackiness before use of the above-prepared cleaning pressure-sensitive adhesive sheet was 1.4 N/25-mm as determined by the method in conformity with JIS Z 0237, in which a SUS 430BA plate was used as a test plate and the tackiness was measured after 1-minute contact-bonding of the pressure-sensitive adhesive sheet and the test plate. The surface resistivity (ASTM D-257) of the pressure-sensitive adhesive sheet on the antistatic-treated side was $6 \times 10^9 \, \Omega$.

EXAMPLE 20

A cleaning pressure-sensitive adhesive sheet was prepared by evaporating aluminium as an electrically conductive substance to a thickness of 1000 angstroms onto one side of a polyester film (substrate) 0.05 mm thick; applying an acrylic pressure-sensitive adhesive to a thickness after drying of 10 μm to the other side of the polyethylene film; and drying the applied pressure-sensitive adhesive. The acrylic pressure-sensitive adhesive was composed of 100 parts by weight of a copoly(butyl acrylate/acrylic acid) (weight ratio: 95/5) and 15 parts by weight of an isocyanate crosslinking agent. The pressure-sensitive adhesive sheet had a tackiness of 1.0 N/25-mm as determined in the same manner as in Example 19 and had a surface resistivity (ASTM D-257) of $1 \times 10^2 \, \Omega$ on the antistatic-treated side (aluminium-deposited side).

EXAMPLE 21

A cleaning sheet was prepared by evaporating aluminium as an electrically conductive substance to a thickness of 1000 angstroms onto one side of a polyester film (substrate) 0.05 mm thick; and forming a layer of a foam 0.8 mm thick on the other side. The foam layer was composed of a rubber latex and was formed by mechanical foaming. The cleaning sheet had a surface resistivity (ASTM D-257) of $1 \times 10^2 \, \Omega$ on the antistatic-treated side (aluminium-deposited side).

COMPARATIVE EXAMPLE 11

A cleaning pressure-sensitive adhesive sheet was prepared in the same manner as in Example 19, except that the substrate was not subjected to antistatic treatment. The cleaning pressure-sensitive adhesive sheet had a tackiness of 1.4 N/25-mm as determined in the same manner as in Example 19 and had a surface resistivity (ASTM D-257) of $6 \times 10^{16} \, \Omega$ on the side where the pressure-sensitive adhesive was not applied.

COMPARATIVE EXAMPLE 12

A cleaning pressure-sensitive adhesive sheet was prepared in the same manner as in Example 20, except that the substrate was not subjected to antistatic treatment (aluminium deposition). The cleaning pressure-sensitive adhesive sheet had a tackiness of 1.0 N/25-mm as determined in the same manner as in Example 19 and had a surface resistivity (ASTM D-257) of $3 \times 10^{15} \, \Omega$ on the side where the pressure-sensitive adhesive was not applied.

COMPARATIVE EXAMPLE 13

A cleaning pressure-sensitive adhesive sheet was prepared in the same manner as in Example 21, except that the substrate was not subjected to antistatic treatment (aluminium deposition). The cleaning sheet had a surface resistivity of $3 \times 10^{15} \, \Omega$ on the side where the foam layer was not formed.

Evaluation Test

Each of the cleaning sheets obtained according to Examples 19 to 21 and Comparative Examples 11 to 13 was evenly stuck to and peeled off from the back of a screen printing plate, which had been used a predetermined number of times and carried a paste (a fluorescent paste for use in the manufacture of a plasma display panel) turned about the back to thereby clean the screen printing plate. As a result, when each of the cleaning sheets according to Examples 19 to 21 was used, no bleeding occurred in a printed matter printed after cleaning and no malfunction occurred due to static electricity. In contrast, when each of the cleaning sheets according to comparative Examples 11 to 13 was used, droplets of the paste on the screen printing plate spread around, and an operator felt electrical shock when he/she touched the sheet during cleaning operation, although no bleeding occurred in a printed matter printed after cleaning.

**Claims**

1. A pressure-sensitive adhesive sheet for removal of a solvent-containing substance, the sheet comprising a substrate and a pressure sensitive adhesive layer formed at least on one side of the substrate, wherein the pressure sensitive adhesive layer adsorbs 20 $g/m^2$ or more of a solvent contained in the substance to be removed when the pressure-sensitive adhesive sheet is immersed in the solvent for 3 minutes.

2. A pressure-sensitive adhesive sheet for removal of a solvent-containing substance, the sheet comprising a substrate and a pressure sensitive adhesive layer formed at least on one side of the substrate, wherein the pressure-sensitive adhesive layer absorbs 5 $g/m^2$ or more of a solvent contained in the substance to be removed when the pressure-sensitive adhesive sheet is immersed in the solvent for 1 second, and wherein the pressure-sensitive adhesive sheet after absorbing 5 $g/m^2$ of the solvent has a tackiness of 1 cN/25-mm or more as determined by a method in conformity with Japanese Industrial Standards (JIS) Z 0237.

3. A pressure-sensitive adhesive sheet for removal of a solvent-containing substance, the sheet comprising a substrate and a pressure sensitive adhesive layer formed at least on one side of the substrate, wherein the pressure-sensitive adhesive layer absorbs 5 $g/m^2$ or more of a solvent contained in the substance to be removed when the pressure-sensitive adhesive sheet is immersed in the solvent for 1 second, and wherein no stain is observed in a stainless steel plate (a SUS 430BA plate) by visual inspection when the pressure-sensitive adhesive sheet after absorbing 5 $g/m^2$ of the solvent is stuck to the stainless steel plate by a reciprocating motion of a 2-kg rubber roller and is peeled off from the stainless steel plate.

4. The pressure-sensitive adhesive sheet for removal of a solvent-containing substance according to claim 3, wherein a pressure-sensitive adhesive constituting the pressure-sensitive adhesive layer comprises such components alone that are insoluble in a solvent contained in the substance to be removed.

5. A pressure-sensitive adhesive sheet for removal of a solvent-containing substance, the sheet comprising a substrate and a pressure-sensitive adhesive layer formed at least on one side of the substrate, wherein a difference $\Delta\delta$ between the solubility parameter (SP) $\delta_1$ [ $(J/cm^3)^{1/2}$] of a pressure-sensitive adhesive constituting the pressure-sensitive adhesive layer and the solubility parameter (SP) $\delta_2$ [ $(J/cm^3)^{1/2}$] of a solvent contained in the solvent-containing substance to be removed falls within a range of $\pm4$ [ $(J/cm^3)^{1/2}$].

6. A pressure-sensitive adhesive sheet for removal of a solvent-containing substance, the sheet comprising a substrate and a pressure-sensitive adhesive layer formed at least on one side of the substrate, wherein the pressure-sensitive adhesive contains fine particles.

7. The pressure-sensitive adhesive sheet for removal of a solvent-containing substance according to claim 6, wherein the fine particles have a mean particle size of from 0.01 to 10 $\mu$m.

8. The pressure-sensitive adhesive sheet for removal of a solvent-containing substance according to any one of claims 1 to 7, wherein the pressure-sensitive adhesive layer before use has a tackiness of from 1 to 400 cN/25-mm as determined by a method in conformity with JIS Z 0237.

9. The pressure-sensitive adhesive sheet for removal of a solvent-containing substance according to any one of claims 1 to 8, wherein the pressure-sensitive adhesive sheet is for use in cleaning of a screen printing plate.

10. A method for removing a solvent-containing substance deposited on an article to be cleaned, the method comprising the step of using a pressure-sensitive adhesive sheet, the pressure-sensitive adhesive sheet comprising a substrate and a pressure-sensitive adhesive layer formed at least on one side of the substrate, wherein the pressure sensitive adhesive layer adsorbs 20 $g/m^2$ or more of a solvent contained in the solvent-containing substance to be removed when the pressure-sensitive adhesive sheet is immersed in the solvent for 3 minutes.

11. A method for removing a solvent-containing substance deposited on an article to be cleaned, the method comprising the step of using a pressure-sensitive adhesive sheet, the pressure-sensitive adhesive sheet comprising a substrate and a pressure-sensitive adhesive layer formed at least on one side of the substrate, wherein the pressure-sensitive adhesive layer absorbs 5 g/m$^2$ or more of a solvent contained in the solvent-containing substance to be removed when the pressure-sensitive adhesive sheet is immersed in the solvent for 1 second, and wherein the pressure-sensitive adhesive sheet after absorbing 5 g/m$^2$ of the solvent has a tackiness of 1 cN/25-mm or more as determined by a method in conformity with JIS Z 0237.

12. A method for removing a solvent-containing substance deposited on an article to be cleaned, the method comprising the step of using a pressure-sensitive adhesive sheet, the pressure-sensitive adhesive sheet comprising a substrate and a pressure-sensitive adhesive layer formed at least on one side of the substrate, wherein the pressure-sensitive adhesive layer absorbs 5 g/m$^2$ or more of a solvent contained in the solvent-containing substance to be removed when the pressure-sensitive adhesive sheet is immersed in the solvent for 1 second, and wherein no stain is observed in a stainless steel plate(a SUS 430BA plate) by visual inspection when the pressure-sensitive adhesive sheet after absorbing 5 g/m$^2$ of the solvent is stuck to the stainless steel plate by a reciprocating motion of a 2-kg rubber roller and is peeled off from the stainless steel plate.

13. A method for removing a solvent-containing substance deposited on an article to be cleaned by the use of a pressure-sensitive adhesive sheet, the pressure-sensitive adhesive sheet comprising a substrate and a pressure-sensitive adhesive layer formed at least on one side of the substrate, the method comprising the steps of (a) determining the solubility parameter (SP) $\delta_1$ [ (J/cm$^3$)$^{1/2}$] of a pressure-sensitive adhesive constituting the pressure-sensitive adhesive layer, (b) determining the solubility parameter (SP) $\delta_2$ [ (J/cm$^3$)$^{1/2}$] of a solvent contained in the solvent-containing substance to be removed, and (c) selecting such a pressure-sensitive adhesive sheet that a difference $\Delta\delta$ between $\delta_1$ and $\delta_2$ falls within a range of $\pm 4$ [ (J/cm$^3$)$^{1/2}$] and removing the solvent-containing substance with the use of the selected pressure-sensitive adhesive sheet.

14. The method for removing a solvent-containing substance according to claim 13, wherein, in Step (a), the pressure-sensitive adhesive sheet is immersed respectively in plural solvents having different solubility parameters (SPs) to thereby determine the degree of swelling or gel fraction of the pressure-sensitive adhesive constituting the pressure-sensitive adhesive layer, and the solubility parameter (SP) of a solvent, in which the pressure-sensitive adhesive exhibits the maximum degree of swelling or the minimum gel fraction, is defined as the solubility parameter (SP) $\delta_1$ [ (J/cm$^3$)$^{1/2}$] of the pressure-sensitive adhesive constituting the pressure-sensitive adhesive layer of the pressure-sensitive adhesive sheet.

15. A method for removing a solvent-containing substance deposited on an article to be cleaned, the method comprising the step of using a pressure-sensitive adhesive sheet, the pressure-sensitive adhesive sheet comprising a substrate and a pressure-sensitive adhesive layer formed at least on one side of the substrate, wherein the pressure-sensitive adhesive layer contains fine particles.

16. A sheet for removal of a solvent-containing substance, the sheet comprising a substrate and a pressure-sensitive adhesive layer or a foam layer formed at least on one side of the substrate, wherein the sheet has been subjected to antistatic treatment.

17. The sheet for removal of a solvent-containing substance according to claim 16, wherein at least one of both sides of the sheet has a surface resistivity of 10$^{13}$ $\Omega$ or less.

18. The sheet for removal of a solvent-containing substance according to claim 16 or 17, wherein the sheet is for use in cleaning of a screen printing plate.

19. A method for removing a solvent-containing substance deposited on an article to be cleaned, the method comprising the step of using a sheet, the sheet comprising a substrate and a pressure-sensitive adhesive layer or a foam layer formed at least on one side of the substrate, wherein the sheet has been subjected to antistatic treatment.

## INTERNATIONAL SEARCH REPORT

| | International application No. |
|---|---|
| | PCT/JP00/03812 |

| A. CLASSIFICATION OF SUBJECT MATTER |
|---|
| IPC Int.Cl$^7$     B41F35/00 |

According to International Patent Classification (IPC) or to both national classification and IPC

| B. FIELDS SEARCHED |
|---|
| Minimum documentation searched (classification system followed by classification symbols) |
| IPC Int.Cl$^7$     B41F1/00~35/06, B41M1/00~1/42 <br> B41J2/165, C09J7/02 |

Documentation searched other than minimum documentation to the extent that such documents are included in the fields searched
Jitsuyo Shinan Koho     1940-1992     Toroku Jitsuyo Shinan Koho   1994-2000
Kokai Jitsuyo Shinan Koho   1971-2000     Jitsuyo Shinan Toroku Koho   1996-2000

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP, 7-157730, A (Kyodo Giken Kagaku K.K.), 20 June, 1995 (20.06.95) (Family: none) | 1-19 |
| A | JP, 10-250043, A (Taiyo Yuden Co., Ltd.), 22 September, 1998 (22.09.98) (Family: none) | 1-19 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 August, 2000 (25.08.00) | 05 September, 2000 (05.09.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

29